# EUROPÄISCHE PATENTANMELDUNG

(11) **EP 4 497 843 A2**
(43) Veröffentlichungstag der Anmeldung: **29.01.2025**
(21) Anmeldenummer: 24189413.8
(22) Anmeldetag: 18.07.2024
(51) Int. Cl.: C25B 1/02, C25B 15/02

(54) **VERMEIDUNG EINER EXPLOSIONSFÄHIGEN ATMOSPHÄRE IN EINEM ENERGIESYSTEM**

(30) Priorität: 24.07.2023 DE 102023119435
(71) Anmelder: HPS Home Power Solutions AG, 12489 Berlin (DE)
(72) Erfinder: PLANERT, Thimo, 10829 Berlin (DE); FRIESE, Daniel, 10243 Berlin (DE); LEVERENZ, Hendrik, 12053 Berlin (DE); SCHULTE, Jonas, 12103 Berlin (DE)
(74) Vertreter: Müller, Thomas

(57) **Zusammenfassung**

Die vorliegende Erfindung betrifft unter anderem ein Verfahren zur Vermeidung einer explosionsfähigen Atmosphäre in einem Energiesystem (10) bei Auftreten eines Störfalls, wobei das Energiesystem (10) aufweist ein als Innensystem (20) ausgebildetes erstes Untersystem, mit einem ersten Wasserstoffsystem, aufweisend eine Elektrolyseeinrichtung (21) und optional eine Brennstoffzelleneinrichtung (22); ein als Außensystem (30) ausgebildetes zweites Untersystem, mit einem zweiten Wasserstoffsystem, aufweisend eine Speichereinrichtung (31) zum Speichern des von der Elektrolyseeinrichtung (21) erzeugten Wasserstoffs, und mit einer definierten Abgabestelle (36) für Wasserstoff, eine Verbindungsleitungseinrichtung (40), die zum Transport von Wasserstoff bereitgestellt sind, wobei zumindest ein erster Leitungsabschnitt (40a) im Innensystem (20) bereitgestellt ist, wobei zumindest ein zweiter Leitungsabschnitt (40b) im Außensystem (30) bereitgestellt ist, und wobei über einen Leitungsbus (40c) der wenigstens eine erste Leitungsabschnitt (40a) des Innensystems (20) mit dem wenigstens einen zweiten Leitungsabschnitt (40b) des Außensystems (30) verbunden ist. Bei Auftreten eines Störfalls wird das erste Wasserstoffsystem im Innensystem (20), insbesondere automatisiert, sicherheitsgerichtet in einen drucklosen Zustand gebracht, indem im ersten Wasserstoffsystem des Innensystems (20) befindlicher Wasserstoff aus dem Innensystem (20) über den Leitungsbus (40c) in das Außensystem (30) und dort zur Abgabestelle (36) transportiert wird.

## Beschreibung

Die vorliegende Erfindung betrifft zunächst Verfahren zur Vermeidung einer explosionsfähigen Atmosphäre in einem Energiesystem, die während eines Störfalls im Energiesystem auftreten kann. Weiterhin betrifft die Erfindung auch ein solches Energiesystem.

Energiesysteme der gattungsgemäßen Art sind im Stand der Technik bereits auf vielfältige Weise bekannt. Mit derartigen Systemen wird beispielsweise Energie für verschiedenste Anwendungsgebiete erzeugt und bereitgestellt.

Bei einer bekannten Art solcher Energiesysteme, die die Grundlage der vorliegenden Erfindung bildet, handelt es sich um ein Gebäudeenergiesystem, mittels dessen Energie in verschiedenen Formen für das Gebäude erzeugt und bereitgestellt wird. Bei einer aus dem allgemeinen Stand der Technik bekannten Ausführungsform wird in einer ersten Betriebsweise des Energiesystems in einer Elektrolyseeinrichtung Wasserstoff erzeugt. Der für die Elektrolyseeinrichtung benötigte elektrische Strom kann beispielsweise mittels Photovoltaik, Windkraft oder unter Verwendung anderer regenerativer Energieträger erzeugt und bereitgestellt werden. Zur kurzzeitigen Speicherung elektrischer Energie kann das Energiesystem zudem über eine Batterieeinrichtung verfügen. Der erzeugte Wasserstoff wird anschließend in einer Speichereinrichtung bis zu dessen Verbrauch gespeichert. Während einer zweiten Betriebsweise des Energiesystems wird der Wasserstoff aus der Speichereinrichtung ausgespeichert und in einer Brennstoffzelleneinrichtung verbraucht. Üblicherweise sind die vorbeschriebenen Komponenten des Energiesystems räumlich voneinander getrennt und über eine Verbindungsleitungseinrichtung miteinander verbunden. Der während der Elektrolyse erzeugte Wasserstoff ist üblicherweise noch feucht. Deshalb muss er, bevor er in der Speichereinrichtung gespeichert werden, vorab getrocknet werden. Dazu kommen geeignete Trocknereinrichtungen zum Einsatz.

Im Wasserstoffsystem des Energiesystems, bei dem es sich um einen Teilbereich des Energiesystems handelt, in dem es um die Erzeugung, Behandlung, Speicherung und Nutzung von Wasserstoff geht, und in dem sich folglich während des Betriebs Wasserstoff befindet, beispielsweise in der Elektrolyseeinrichtung, in der Trocknung sowie in der Verbindungsleitungseinrichtung, befindet sich im Regelbetrieb und in einem begrenztem Zeitraum nach Verlassen des Regelbetriebes eine begrenzte Menge an Wasserstoff. Die Elektrolyseeinrichtung, insbesondere ein Elektrolysestack der Elektrolyseeinrichtung, verliert im Betrieb und im Stillstand Wasserstoff, beispielsweise über die Kathode. Dieser Wasserstoff wird in der Regel durch eine dauerhafte technische Lüftung des Energiesystems ausreichend verdünnt. Ein Ausfall der Batterie/Leistungselektronik des Energiesystems führt zum Ausfall der Lüftung. In Folge kann sich eine explosionsfähige Atmosphäre im Energiesystem ausbilden. Um diesen Zustand zu vermeiden, wird in der Regel eine Notstromversorgung eingesetzt, die den Lüftungsvolumenstrom und damit die sichere Verdünnung austretenden Wasserstoffs bis weit unterhalb der Zündgrenze von Wasserstoff-Luft-Gemischen aufrecht erhält.

Eine Lösung für ein Verdünnungs- und Wärmerückgewinnungskonzept wird in Anmeldung EP3380792 der Anmelderin beschrieben.

In der WO 2020/127537A1 der Anmelderin wird ein Sicherheitskonzept offenbart, damit keine gefährlichen explosionsfähigen Atmosphären entstehen können. Bei dieser bekannten Lösung geht es um den Betrieb eines Spülsystems, welches Bestandteil eines Innensystems des Energiesystems ist. Das Spülsystem hat insbesondere die Aufgabe, die insbesondere auch im Regelbetrieb pulsartig mit recht hohen Volumenstromspitzen anfallenden wasserstoffhaltigen Ablassvolumenströme in zeitlich vergleichmäßigte Volumenströme mit deutlich kleineren Volumenstromspitzen zu überführen und in einer eigens dafür vorgesehenen Mischzone innerhalb des Innensystems mit einem Luftstrom ausreichend zu verdünnen. Dieser verdünnte Ablassvolumenstrom wird dann über eine Ausströmeinrichtung aus dem Innensystem an die Umgebung abgegeben.

Ein grundsätzliches Beispiel für eine Notstromversorgung ist in der WO 2015/144446 A1 offenbart. Diese Notstromversorgung dient als Ersatzstromversorgung einer Elektrolyseanlage nach Ausfall der eigentlichen regulären Stromversorgung. Bei dieser bekannten Lösung wird nach dem Ausfall der regulären Stromversorgung die Elektrolyseanlage ersatzweise mit aus dem im Elektrolysestack vorhandenen und in elektrischen Strom umwandelbaren Energiepotential mit Strom versorgt. Dadurch verkompliziert sich aber der Aufbau und Elektrolyseanlage. Außerdem kann diese Notstromversorgung nicht als Notstromversorgung für die oben beschriebene Lüftung verwendet werden.

Energiesysteme der eingangs genannten Art sind insbesondere autarke Systeme, die den elektrischen Strom unabhängig von einem existierenden Stromnetz erzeugen. Elektrische Verbraucher, wie beispielsweise die Lüftung, aber auch Notromaggregate und dergleichen, werden mit dem vom Energiesystem erzeugten elektrischen Strom versorgt. Daher besteht das Bedürfnis, die stromverbrauchenden Komponenten des Energiesystems so stromsparend wie möglich und so klein wie möglich auszulegen.

Ebenso kann eine explosionsfähige Atmosphäre im Energiesystem entstehen, wenn eine über einem definierten Grenzwert liegende Leckage in einer Komponente, die in Bezug zu Wasserstoff steht, im Energiesystem auftritt.

Der vorliegenden Erfindung liegt die Aufgabe zugrunde, ein Verfahren zur Vermeidung einer explosionsfähigen Atmosphäre in einem Energiesystem beim Auftreten eines Störfalls sowie ein entsprechend weitergebildetes Energiesystem bereitzustellen, bei dem die Vermeidung der Bildung einer explosionsfähigen Atmosphäre auf einfache Weise und energieschonende Weise, insbesondere unter Verwendung bereits bestehender Komponenten des Energiesystems, realisiert wird.

Diese Aufgabe wird erfindungsgemäß gelöst durch das Verfahren mit den Merkmalen des unabhängigen Patentanspruchs 1, welches den ersten Aspekt der Erfindung darstellt, durch das Verfahren mit den Merkmalen des unabhängigen Patentanspruchs 8, welches den zweiten Aspekt der Erfindung darstellt, sowie durch das Energiesystem mit den Merkmalen des unabhängigen Patentanspruchs 12, welches den dritten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit einem der Erfindungsaspekte offenbart sind, vollumfänglich auch im Zusammenhang mit jeweils allen anderen Erfindungsaspekten, und umgekehrt, so dass hinsichtlich der Offenbarung der einzelnen Erfindungsaspekte stets vollinhaltlich auch Bezug auf die jeweils anderen Erfindungsaspekte genommen wird. Insbesondere ergibt sich der Ablauf der erfindungsgemäßen Verfahren auch aus der Funktionsbeschreibung sowie der Beschreibung des Zusammenwirkens der einzelnen Komponenten des erfindungsgemäßen Energiesystems, so dass hinsichtlich des Ablaufs und der Durchführung der erfindungsgemäßen Verfahren zur Vermeidung von Wiederholungen auch auf die Ausführungen zu dem erfindungsgemäßen Energiesystem vollinhaltlich Bezug genommen und verwiesen wird.

Gemäß dem ersten und zweiten Aspekt der Erfindung wird jeweils ein Verfahren zur Vermeidung der Bildung einer explosionsfähigen Atmosphäre in einem Energiesystem bereitgestellt, wobei das Verfahren dann durchgeführt wird, wenn im Energiesystem ein entsprechender Störfall auftritt. Ein Störfall ist generell eine Störung des bestimmungsgemäßen Betriebs des Energiesystems, wobei im vorliegenden Fall der Störfall auf den Bereich Wasserstoff bezogen wird. Die Erfindung ist grundsätzlich nicht auf bestimmte Arten von Störfällen beschränkt. Einige Beispiele für mögliche Störfälle werden weiter unten näher beschrieben.

Insbesondere geht es bei der vorliegenden Erfindung darum zu vermeiden, dass während des Betriebs des Energiesystems, im Falle einer Störung, aufgrund des Wasserstoffs eine ungewollte, explosionsfähige Atmosphäre entsteht.

Gemäß den beiden Verfahrensaspekten, ebenso wie beim Energiesystem gemäß dem dritten Erfindungsaspekt, weist das Energiesystem, welches im Zusammenhang mit dem dritten Erfindungsaspekt weiter unten noch in größerem Detail beschrieben wird, eine Reihe von Grundmerkmalen auf.

Bei dem Energiesystem handelt es sich insbesondere ein Gebäudeenergiesystem, welches verschiedene Formen von Energie für das Gebäude erzeugt und bereitstellt.

Zunächst weist das Energiesystem ein, insbesondere als Innensystem ausgebildetes, erstes Untersystem auf. Innensystem bedeutet in diesem Fall, dass sich dieses System innerhalb des Gebäudes befindet. Das Innensystem weist eine Reihe unterschiedlicher Komponenten auf. Unter anderem weist das Innensystem ein erstes Wasserstoffsystem auf. Ein Wasserstoffsystem ist vorliegend insbesondere ein System, das heißt ein aus mehreren Komponenten bestehendes Ganzes, das mit Wasserstoff zu tun hat. Das erste Wasserstoffsystem stellt somit bevorzugt ein Teilsystem des Energiesystems, und insbesondere ein Teilsystem des Innensystems, dar.

Die einzelnen Komponenten des ersten Wasserstoffsystems dienen zur Herstellung des Wasserstoffs, beispielsweise mittels Elektrolyse, zur Speicherung des Wasserstoffs, beispielsweise in Form einer Speichereinrichtung, zur Behandlung des Wasserstoffs, beispielsweise zur Trocknung, Filterung und dergleichen, zum Transport des Wasserstoffs, beispielsweise in Form einer Verbindungsleitungseinrichtung, zum Beeinflussen des Volumenstroms, beispielsweise in Form von Ventileinrichtungen, und zum Verbrauch des Wasserstoffs, beispielsweise in Form einer Brennstoffzelleneinrichtung. Das erste Wasserstoffsystem weist insbesondere wenigstens eine Wasserstoffquelle auf. Eine Wasserstoffquelle ist insbesondere eine Komponente, aus der Wasserstoff austritt.

In einer grundsätzlichen Ausgestaltung weist das erste Wasserstoffsystem eine Elektrolyseeinrichtung auf, welche zur Erzeugung von Wasserstoff bereitgestellt ist, und optional eine Brennstoffzelleneinrichtung, wobei die Erfindung nicht darauf beschränkt ist.

Weiterhin weist das Energiesystem ein, insbesondere als Außensystem ausgebildetes, zweites Untersystem auf. Dieses weist in Analogie zum ersten Untersystem ebenfalls verschiedene Komponenten, insbesondere ein zweites Wasserstoffsystem, auf. Je nach Ausgestaltung weist das zweite Wasserstoffsystem eine Speichereinrichtung zum Speichern des von der Elektrolyseeinrichtung erzeugten Wasserstoffs auf. In diesem Fall ist die Speichereinrichtung beispielsweise Bestandteil des zweiten Wasserstoffsystems, und damit des zweiten Untersystems. Oder aber, das zweite Wasserstoffsystem weist eine Schnittstelle zu einer Speichereinrichtung zum Speichern des von der Elektrolyseeinrichtung erzeugten Wasserstoffs auf. In diesem Fall ist die Speichereinrichtung nicht Bestandteil des zweiten Wasserstoffsystems. Es sind auch Kombinationen aus beiden Alternativen möglich. Die Speichereinrichtung wiederum kann aus verschiedenen Komponenten bestehen. Beispielsweise kann die Speichereinrichtung eine Hochdruckspeichereinrichtung, bestehend aus einem oder mehreren Hochdruckspeicherbehältern, aufweisen wobei jeweils zwei oder mehr Hochdruckspeicherbehälter zu einem Speicherbundle zusammengefasst sein können. Ebenso kann die Speichereinrichtung eine Mitteldruckspeichereinrichtung, bestehend aus einem oder mehreren Mitteldruckspeicherbehältern, aufweisen, die zur Zwischenspeicherung des erzeugten Wasserstoffs, dient, bevor dieser zur endgültigen Lagerung in die Hochdruckspeichereinrichtung eingespeichert wird. Derartige Speichereinrichtungen werden im Zusammenhang mit dem erfindungsgemäßen Energiesystem weiter unten in größerem Detail beschrieben. Das zweite Wasserstoffsystem weist insbesondere wenigstens eine Wasserstoffquelle auf. Eine Wasserstoffquelle ist insbesondere eine Komponente, aus der Wasserstoff austritt.

Darüber hinaus weist das zweite Untersystem eine definierte Abgabestelle für Wasserstoff auf. Über diese Abgabestelle kann der Wasserstoff auf geregelte Weise kontrolliert aus dem zweiten Untersystem abgegeben werden. Bei der Abgabestelle handelt es sich bevorzugt um einen speziellen Bereich, etwa um eine so genannte Ex-Zone, insbesondere um eine Ex-Zone 2. Oder aber die Abgabestelle liegt in einem derartigen Bereich. Als Ex-Zonen bezeichnet man generell speziell gekennzeichnete Bereiche, in denen die Gefahr einer Explosion besteht, da in ihnen zündfähige Konzentrationen brennbarer Gase, hier Wasserstoff, auftreten können. Bei einer Ex-Zone 2 handelt es sich insbesondere um einen Bereich, in dem nicht damit zu rechnen ist, dass bei normalem Betrieb eine explosionsfähige Atmosphäre aus einem Gemisch von Luft mit brennbaren Substanzen in Form von Gas, Dampf oder Nebel auftritt, und wenn, dann nur selten und auch nur kurzzeitig.

Weiterhin weist das Energiesystem eine Verbindungsleitungseinrichtung bestehend mindestens einem Leitungsabschnitt, vorzugsweise aus mehreren Leitungsabschnitten auf, die zum Transport von Wasserstoff bereitgestellt sind. Zumindest ein erster Leitungsabschnitt ist im Innensystem bereitgestellt und bildet insoweit einen Bestandteil des ersten Wasserstoffsystems. Zumindest ein zweiter Leitungsabschnitt ist im Außensystem bereitgestellt und bildet insoweit einen Bestandteil des zweiten Wasserstoffsystems. Über einen Leitungsbus, das heißt über einen Übertragungsweg oder Verbindungsweg, ist der wenigstens eine erste Leitungsabschnitt des Innensystems mit dem wenigstens einen zweiten Leitungsabschnitt des Außensystems verbunden.

Zusammengefasst weist das Energiesystem sowohl ein erstes Untersystem, ein Innensystem, mit einem ersten Wasserstoffsystem bestehend aus Elektrolyseeinrichtung und optional einer Brennstoffzelleneinrichtung, als auch ein zweites Untersystem, ein Außensystem, wo der erzeugte Wasserstoff gespeichert wird, auf. Das Außensystem weist auch eine Abgabestelle für Wasserstoff auf, über die der Wasserstoff bei Bedarf kontrolliert an die Umgebung abgegeben wird. Verbunden sind die Komponenten des Innensystems und des Außensystems über die Verbindungsleitungseinrichtung, wobei die direkte Verbindung zwischen Innensystem und Außensystem über einen Leitungsbus erfolgt.

Die verschiedenen Aspekte der Erfindung basieren auf dem gemeinsamen erfinderischen Grundgedanken, dass in dem Energiesystem ein Explosionsschutz realisiert ist. Gemäß dem ersten Aspekt der Erfindung wird der Explosionsschutz durch einen sicheren drucklosen Zustand im Innensystem des Energiesystems realisiert. Hier wird eine redundante Sicherheit bei Leckagen in einer wasserstoffbasierten Energieanlage bereitgestellt. Gemäß dem zweiten Aspekt der Erfindung wird der Explosionsschutz durch eine Dichtheitsprüfung und Druckentlastung im Außensystem realisiert. Hier wird eine Dichtheitsprüfung und Druckentlastung eines Wasserstoffsystems bereitgestellt. Darüber hinaus ist gemäß einem weiteren Aspekt ein Explosionsschutz durch eine Kombination aus erstem und zweitem Erfindungsaspekt realisiert. Die erfindungsgemäßen Verfahren werden durchgeführt, wenn im Energiesystem ein Störfall im Zusammenhang mit Wasserstoff auftritt, aufgrund dessen eine ungewollte, explosionsfähige Atmosphäre entsteht.

Die vorliegende Erfindung gemäß ihrer verschiedenen Aspekte stellt insbesondere eine Lösung zur redundanten Sicherheit bei Leckagen in einem wasserstoffbasierten Energiesystem bereit. Dabei kann eine Gefährdung durch die Bildung einer explosionsfähigen Atmosphäre vermieden werden.

Gemäß dem ersten Aspekt der Erfindung wird ein Verfahren zur Vermeidung der Bildung einer explosionsfähigen Atmosphäre in einem Energiesystem bei Auftreten eines Störfalls bereitgestellt, welches die Merkmale des unabhängigen Patentanspruchs 1 aufweist.

Das Energiesystem weist die weiter oben beschriebenen Grundmerkmale auf, so dass an dieser Stelle auf die diesbezüglichen Ausführungen, ebenso wie auf die allgemeine Beschreibung der Erfindung, weiter oben vollinhaltlich Bezug genommen und verwiesen wird.

Gemäß dem ersten Aspekt der Erfindung ist das Verfahren dadurch gekennzeichnet, dass bei Auftreten eines Störfalls, beziehungsweise wenn ein Störfall detektiert wird, das erste Wasserstoffsystem im Innensystem, insbesondere automatisiert, sicherheitsgerichtet in einen drucklosen Zustand gebracht wird, indem im ersten Wasserstoffsystem des Innensystems befindlicher Wasserstoff aus dem Innensystem über den Leitungsbus in das Außensystem und dort zur Abgabestelle transportiert wird.

Gemäß einer Ausführungsform handelt es sich bei dem Störfall um den Ausfall einer Lüftungseinrichtung, die zur Erzeugung eines Lüftungsstroms bereitgestellt ist, der eine erforderliche Verdünnung von aus dem ersten Wasserstoffsystem des Innensystems austretendem Wasserstoff gewährleistet. Alternativ oder zusätzlich handelt es sich gemäß einer Ausführungsform bei dem Störfall um eine über einem definierten Grenzwert liegende Leckage.

Wenn die Lüftungseinrichtung, beispielsweise aufgrund eines Stromausfalls, ausfällt, verfügt das Energiesystem über eine Notstromeinrichtung. Wenn die Notstromeinrichtung aktiviert ist, erfolgt eine sicherheitsgerichtete Entspannung der wasserstoffführenden Komponenten im Innensystem. Diese Situation soll anhand eines Ausführungsbeispiels verdeutlicht werden.

In der Elektrolyseeinrichtung, in der Trocknung sowie in der Verbindungsleitungseinrichtung und hier insbesondere im Leitungsbus, der die Verbindungsleitung zwischen dem Innensystem und dem Außensystem darstellt, beispielsweise befindet sich immer Wasserstoff im Regelbetrieb. Der Elektrolysestack der Elektrolyseeinrichtung verliert im Betrieb und im Stillstand Wasserstoff, beispielsweise über die Kathode. Dieser Wasserstoff wird in der Regel durch die dauerhafte technische Lüftung des Energiesystems verdünnt. Ein Ausfall der Stromzufuhr, beispielsweise der Batterie/Leistungselektronik, führt zum Ausfall der Lüftung. In Folge kann sich eine explosionsfähige Atmosphäre im Innensystem ausbilden. Um diesen Zustand zu vermeiden, ist eine Notstromversorgung erforderlich, die den Lüftungsvolumenstrom aufrecht erhält. Um die Notstromversorgung möglichst klein auslegen zu können, beispielsweise um einen möglichst kurzen Lüftungsbedarf zu erzeugen, wird gemäß dem Verfahren des ersten Erfindungsaspekts der in der Elektrolysevorrichtung befindliche Druck aktiv reduziert. Hierfür ist insbesondere eine spezielle Ventileinrichtung in dem Außensystem vorgesehen. Durch den Leitungsbus zwischen Innensystem und Außensystem kann der Wasserstoff sicher über eine dafür vorgesehene Abgabestelle im Außensystem abgeführt werden. Nach dem Abführen des Wasserstoffs besteht aus Sicherheitsgründen in Verbindung mit Wasserstoff kein weiterer Lüftungsbedarf im Innensystem. Die Notstromversorgung kann dann deaktiviert oder bei deutlich verringertem Energiebedarf länger betrieben werden, beispielsweise, um Systemdaten weiter zu erfassen. Die Notstromversorgung ist so ausgelegt, dass die Belüftung des Innensystems sowie der Energiebedarf der Steuerungstechnik, wie beispielsweise Controller, Ventileinrichtungen und dergleichen, für diesen Zeitraum bereitstehen. Im Fehlerfall drucklosem Wasserstoffsystem wird die benötigte Kapazität für die Notstromversorgung damit wesentlich kleiner.

Gemäß einer Ausführungsform wird, wenn im Energiesystem als Störfall der Ausfall der Lüftungseinrichtung erkannt wird, bei Ausfall der Lüftungseinrichtung automatisch eine dem Energiesystem zugeordnete Notstromversorgungseinrichtung aktiviert, welche erforderliche Komponenten in Bezug auf Wasserstoff des Innensystems und/oder des Außensystems, insbesondere Ventile und/oder Controller, mit elektrischer Energie versorgt, sodass der im ersten Wasserstoffsystem des Innensystems befindliche Wasserstoff aus dem Innensystem über den Leitungsbus in das Außensystem und dort zur Abgabestelle transportiert wird.

In bevorzugter Weiterbildung ist dem Energiesystem eine Steuereinrichtung zugeordnet.

Wenn von der Steuereinrichtung der Ausfall der Lüftungseinrichtung erfasst wird, oder wenn in der Steuereinrichtung Informationen bezüglich des Ausfalls der Lüftungseinrichtung empfangen werden, aktiviert die Steuereinrichtung automatisch die Notstromversorgungseinrichtung sowie die erforderlichen Komponenten des Innensystems und/oder des Außensystems, sodass der im ersten Wasserstoffsystem des Innensystems befindliche Wasserstoff aus dem Innensystem über den Leitungsbus in das Außensystem und zur Abgabestelle befördert wird, wobei die Steuereinrichtung nach Abführung des Wasserstoffs über die Abgabestelle die Notstromversorgungseinrichtung, und optional die erforderlichen Komponenten des Innensystems und/oder des Außensystems deaktiviert.

Gemäß einer Ausführungsform werden, wenn im Energiesystem als Störfall eine über einem definierten Grenzwert liegende Leckage erkannt wird, erforderliche Komponenten in Bezug auf Wasserstoff des Innensystems und/oder des Außensystems, insbesondere Ventile und/oder Controller, aktiviert, sodass der im ersten Wasserstoffsystem des Innensystems befindliche Wasserstoff aus dem Innensystem über den Leitungsbus in das Außensystem und dort zur Abgabestelle gelangen kann.

In bevorzugter Weiterbildung dieser Ausführungsform ist dem Energiesystem eine Steuereinrichtung zugeordnet. Wenn von der Steuereinrichtung eine über einem definierten Grenzwert liegende Leckage erfasst wird, oder wenn in der Steuereinrichtung Informationen bezüglich einer über einem definierten Grenzwert liegenden Leckage empfangen werden, aktiviert die Steuereinrichtung die erforderlichen Komponenten des Innensystems und/oder des Außensystems, sodass der im ersten Wasserstoffsystem des Innensystems befindliche Wasserstoff aus dem Innensystem über den Leitungsbus in das Außensystem und zur Abgabestelle befördert wird, wobei die Steuereinrichtung nach Abführung des Wasserstoffs über die Abgabestelle die Komponenten insbesondere deaktiviert.

Gemäß einer Ausführungsform wird, wenn ein Störfall detektiert wird, eine zentrale Ventileinrichtung, die insbesondere eingangsseitig von dem Leitungsbus im ersten Leitungsabschnitt im Innensystem und/oder ausgangsseitig von dem Leitungsbus im zweiten Leitungsabschnitt im Außensystem angeordnet ist, aktiviert, sodass der im ersten Wasserstoffsystem des Innensystems befindliche Wasserstoff aus dem Innensystem über den Leitungsbus in das Außensystem und dort zur Abgabestelle transportiert wird.

Nachfolgend werden eine Reihe von bevorzugten Ausführungsformen und weiterbildenden Merkmalen beschrieben.

Gemäß dem ersten Aspekt der Erfindung wird das erste Wasserstoffsystem in einen drucklosen Zustand gebracht, das heißt, es wird ein sicherer druckloser Zustand im Innensystem geschaffen. Das bedeutet insbesondere, dass das erste Wasserstoffsystem entspannt und/oder entleert wird. Das erfolgt derart, dass im ersten Wasserstoffsystem des Innensystems befindlicher Wasserstoff aus dem Innensystem über den Leitungsbus in das Außensystem transportiert wird, und im Außensystem zur Abgabestelle transportiert wird. Die Ausgangslage ist dabei beispielsweise wie folgt:
Die Elektrolyseeinrichtung beispielsweise gibt im abgeschalteten Zustand mit der Zeit stetig abnehmende, kleinere Mengen Wasserstoff an die Umgebung ab, bis sich der Stackdruck an den Umgebungsdruck angeglichen hat. Bei technisch dichten Komponenten/Verbindungen ist davon auszugehen, dass die Dichtheit nicht dauerhaft gewährleistet ist. Der aus diesem Grund bereitgestellte Lüftungsvolumenstrom gewährleitet kontinuierlich die erforderliche Verdünnung von Wasserstoff mit Luft. Ein Lüftungsausfall kann auf Grund selbst kleiner Mengen an Leckagen zur Bildung eine explosionsfähigen Atmosphäre im Innensystem führen. Dieser Zustand kann beispielsweise durch eine gesicherte Lüftung unter Verwendung einer Notstromeinrichtung vermieden werden.

Durch das sicherheitsgerichtete Entspannen des Wasserstoffsystems kann eine Gefährdung durch die Bildung einer explosionsfähigen Atmosphäre vermieden werden. Ein Ausfall der Lüftung führt in Folge zu einem kontrollierten Abführen des im Innensystem befindlichen Wasserstoffs und stellt neben der Lüftung und der damit erzielten Verdünnung somit eine weitere primäre Maßnahmen zum Explosionsschutz dar. Das Außensystem weist eine Abgabestelle auf, die beispielsweise als eine definierte Ex-Zone 2 ausgebildet ist oder aber in einer solchen Zone liegt. Das Innensystem und das Außensystem sind durch einen Leitungsbus verbunden. Durch die Abgabestelle, beispielsweise durch die definierte Ex-Zone 2 im Bereich des Außensystems, kann die im Innensystem befindliche Wasserstoffmenge zu jedem Zeitpunkt, insbesondere im Gefährdungsfall, sicher abgeführt werden. Das Prinzip erfordert keine zusätzliche Leitung ins Freie.

Die störungssichere Stromversorgung beziehungsweise die Notstromversorgung der Lüfter im Innensystem kann bei der erfindungsgemäßen Lösung zeitlich wesentlich begrenzt werden. Die Dichtheitsanforderungen an die Komponenten des Innensystems mit Bezug auf Wasserstoff können reduziert werden, da der Zustand "System steht unter Druck + keine Lüftung verfügbar" sicherheitstechnisch nicht mehr berücksichtigt werden muss. Auch können sicherheitstechnische Anforderungen an die Lüftungssensorik und Lüftungsaktorik reduziert werden. Eine Gefährdung durch spontane und hohe Leckagen kann in direkter Reaktion, durch Druckreduktion, reduziert werden.

Das erfindungsgemäße Verfahren, insbesondere gemäß dem ersten Aspekt, geht dabei einen anderen Weg als die in der WO 2020/127537A1 beschriebene Lösung. Beiden Lösungen ist lediglich gemeinsam, dass es darum geht, ein Sicherheitskonzept bereitzustellen, damit keine gefährlichen explosionsfähigen Atmosphären entstehen können. Während bei der bekannten Lösung Wasserstoff, welcher insbesondere auch im Regelbetrieb des Systems anfällt, über das Innensystem abgegeben wird, läuft das erfindungsgemäße Verfahren anders ab, da der Wasserstoff nicht über das Innensystem abgegeben wird, sondern zunächst zum Außensystem transportiert wird, und dort zu einer Abgabestelle. Bei der bekannten Lösung geht es darum, dass ein Spülvorgang durchgeführt wird. Hat der Ablassvolumenstrom aus dem Spülvorgang zu viel Wasserstoff, wird er noch verdünnt. Bei der erfindungsgemäßen Lösung geht es im Vergleich zur bekannten Lösung darum, dass zunächst ein Störfall detektiert wird. In diesem Fall wird jedoch keine Verdünnung durch Zumischung eines Luftstroms vorgenommen. Vielmehr werden die einzelnen Komponenten des ersten Wasserstoffsystems des Innensystems in einen drucklosen Zustand gebracht. Der in den Komponenten befindliche Wasserstoff wird über das Leitungssystem zu einer Abgabestelle transportiert, die sich erfindungsgemäß im Außensystem befindet.

Bei der bekannten Lösung wird der funktions- und sicherheitsgerechte Betrieb eines Spülsystems überwacht. Der Wasserstoff wird im Betrieb in das Innensystem kontrolliert abgegeben und verdünnt. Im Fehlerfall wird das Spülen unterbunden und die Lüftung gegebenenfalls verstärkt. Wenn das Spülsystem abgeschaltet wird, bleiben die einzelnen Komponenten des ersten Wasserstoffsystems bei der bekannten Lösung weiterhin unter Druck und verlieren den Druck und den Wasserstoff nur sehr langsam, beispielsweise über Dichtungen, die Elektrolyseeinrichtung oder normale, bestimmungsgemäße Leckagestellen. Ein bewusstes, aktives Drucklosmachen ist hier nicht vorgesehen.

Die vorliegende Erfindung wählt durch das Entspannen über das Außensystem einen anderen Ansatz. Treten Störfälle im ersten Wasserstoffsystem im Innensystem auf, kann der Wasserstoffinhalt in den Wasserstoffkomponenten schnell reduziert und insbesondere aktiv auf Umgebungsdruck entspannt werden. Ein langes und zunächst verstärktes Nachlaufen einer Lüftungseinrichtung zur Verdünnung ist damit vermeidbar, zumindest aber reduzierbar, was insbesondere auch zu einer Energieeinsparung führt.

Damit unterscheiden sich die Verfahrenskonzepte der bekannten Lösung und der erfindungsgemäßen Lösung in wesentlichen Punkten, da sie andere Situationen betreffen. Da der Wasserstoffdruck im Innensystem bei der bekannten Lösung erhalten bleibt, gibt es dort noch für lange Zeit eine treibende Druckdifferenz. Bei der erfindungsgemäßen Lösung hingegen wird das Innensystem drucklos gemacht, so dass es keine treibende Druckdifferenz mehr gibt.

Das Verfahren gemäß dem ersten Aspekt der Erfindung ermöglicht die synergetische Nutzung des Gesamt-Energiesystems, das heißt die Verwendung bestehender Aktorik und systemcharakterisierender Rohrleitungen, zum Beispiel den Leitungsbus, zum sicheren Abführen von Wasserstoff. Eine spezifische Auslegung/Reduktion der Notstromfunktionalität für das Verdünnungskonzept aufgrund der Lüfterversorgung durch zusätzliche reaktive Maßnahmen ist gegeben. Die Verwendung technisch dichter Verbindungen/Komponenten im Leckage-überwachten Bereich sind möglich. Detektion und Reaktion sind zu jedem Zeitpunkt gegeben.

Gemäß dem zweiten Aspekt der Erfindung wird ein Verfahren zur Vermeidung der Bildung einer explosionsfähigen Atmosphäre in einem Energiesystem bei Auftreten eines Störfalls bereitgestellt, welches die Merkmale des unabhängigen Patentanspruchs 8 aufweist.

Das Energiesystem weist die weiter oben beschriebenen Grundmerkmale auf, so dass an dieser Stelle auf die diesbezüglichen Ausführungen, ebenso wie auf die allgemeine Beschreibung der Erfindung, weiter oben vollinhaltlich Bezug genommen und verwiesen wird.

Gemäß dem zweiten Aspekt der Erfindung ist das Verfahren dadurch gekennzeichnet, dass das Energiesystem in einer diskontinuierlichen Betriebsweise betrieben wird, in welcher aufgrund wechselnder Prozesse einzelne Komponenten in Bezug auf Wasserstoff im ersten Wasserstoffsystem im Innensystem und/oder im zweiten Wasserstoffsystem im Außensystem zeitweilig nicht benutzt werden und dass, insbesondere automatisiert, in denjenigen Komponenten, die nicht benutzt werden, eine Dichtheitsprüfung durchgeführt wird.

Insbesondere ist das Verfahren des zweiten Aspekts zusätzlich auch gemäß dem ersten Aspekt der Erfindung ausgebildet. Ein solches Verfahren stellt somit eine Kombination aus erstem und zweitem Aspekt der Erfindung dar. Zur Vermeidung von Wiederholungen wird diesbezüglich deshalb auch auf die Ausführungen zum ersten Erfindungsaspekt, ebenso wie auf die allgemeine Beschreibung der Erfindung, vollinhaltlich Bezug genommen und verwiesen.

Das Energiesystem gemäß dem zweiten Aspekt wird in einer diskontinuierlichen Betriebsweise betrieben. Hierbei handelt es sich um einen Betrieb mit Unterbrechungen. Aufgrund wechselnder Prozesse, wie weiter unten noch näher erläutert wird, werden einzelne Komponenten in Bezug auf Wasserstoff im ersten Wasserstoffsystem im Innensystem und/oder im zweiten Wasserstoffsystem im Außensystem zeitweilig nicht benutzt. Das erfindungsgemäße Verfahren sieht nun vor, dass, insbesondere automatisiert, in denjenigen Komponenten, die nicht benutzt werden, eine Dichtheitsprüfung durchgeführt wird. Dies kann wiederum über eine Steuereinrichtung des Energiesystems erfolgen. Wenn die Steuereinrichtung Informationen darüber erfasst oder Informationen empfängt, dass eine Komponente aktuell nicht benutzt wird, kann die Steuereinrichtung bei dieser Komponente eine Dichtheitsprüfung initiieren. Erläuternde Beispiele hierzu sind im weiteren Verlauf der Beschreibung zu finden.

Gemäß einer Ausführungsform wird, wenn anhand der Dichtheitsprüfung detektiert wird, dass eine über einem definierten Grenzwert liegende Leckage vorliegt, das erste Wasserstoffsystem im Innensystem, insbesondere wenigstens eine Wasserstoffquelle davon, und/oder das zweite Wasserstoffsystem im Außensystem, insbesondere wenigstens eine Wasserstoffquelle davon, gesperrt. Dies erfolgt bevorzugt über die Steuereinrichtung.

In einer Ausführungsform wird, wenn anhand der Dichtheitsprüfung detektiert wird, dass eine über einem definierten Grenzwert liegende Leckage vorliegt, eine zentrale Ventileinrichtung, die insbesondere eingangsseitig von dem Leitungsbus im ersten Leitungsabschnitt im Innensystem und/oder ausgangsseitig von dem Leitungsbus im zweiten Leitungsabschnitt im Außensystem angeordnet ist, aktiviert, vorzugsweise über die Steuereinrichtung, sodass der im ersten Wasserstoffsystem des Innensystems befindliche Wasserstoff aus dem Innensystem über den Leitungsbus in das Außensystem und dort zur Abgabestelle transportiert wird und/oder sodass der im zweiten Wasserstoffsystem des Außensystems befindliche Wasserstoff aus dem Außensystem über den zweiten Leitungsabschnitt zur Abgabestelle transportiert wird.

Nachfolgend werden eine Reihe von bevorzugten Ausführungsformen und weiterbildenden Merkmalen beschrieben.

Gemäß dem zweiten Aspekt der Erfindung wird ein Explosionsschutz durch Dichtheitsprüfung und Druckentlastung im Außensystem geschaffen. Die Ausgangslage ist dabei beispielsweise wie folgt:
Das Außensystem ist direkt mit den volumetrisch großen Wasserstoffspeichern, etwa Hochdruckspeichereinrichtungen und/oder Mitteldruckspeichereinrichtungen, verbunden, oder die Wasserstoffspeicher sind Bestandsteile des Außensystems. Das Außensystem weist beispielsweise keine ausgewiesene Ex-Zone im Bereich der fluidtechnischen Komponenten auf, wohl aber bevorzugt eine Abgabestelle für Wasserstoff, die eine solche Zone darstellt oder in einer solchen Zone liegt. Grundlage hierfür ist beispielsweise die Sicherstellung der auf Dauer technisch dichten Verbindungen/Komponenten. Komponenten die definitionsgemäß lediglich technisch dicht ausgeführt sind, müssen aber regelmäßig auf Dichtheit geprüft werden. Teilweise kann die Dichtheit bislang nur durch händische Prüfung vor Ort nachgewiesen werden. Insbesondere aufgrund der erheblichen Volumen der Speichereinrichtungen, die direkt mit dem Fluidsystem, insbesondere mit der Verbindungsleitungseinrichtung, verbunden sind, ist eine messtechnische Dichtheitsprüfung nicht oder nur bedingt möglich, da sich eine Leckagemenge aus der Druckdifferenz, der Zeit und dem geometrischen Volumen definiert. Ist das geometrische Volumen - zu - groß, wird die Aussage/Prüfung ungenau beziehungsweise sehr träge. Werden Leckagen durch eine messtechnische Dichtheitsprüfung erkannt, können keine direkten steuerungstechnischen Maßnahmen abgeleitet werden. Es werden insbesondere organisatorische Maßnahmen abgeleitet. Ein dringender Serviceeinsatz ist teuer und träge. Aus den oben genannten Gründen werden möglichst alle Verbindungen und Komponenten auf Dauer technisch dicht ausgeführt. Dies ist ein wesentlicher Kostentreiber.

Basierend auf dieser Ausgangslage ergibt sich das erfindungsgemäße Verfahren gemäß dem zweiten Aspekt der Erfindung insbesondere wie folgt:
Automatische Absperreinrichtungen, wie beispielsweise Ventileinrichtungen, etwa Magnetventile, sind fluidtechnisch möglichst nahe an den großen Speichereinrichtungen positioniert. Der zweite Verbindungsleitungsabschnitt im Außensystem und sämtliche darin befindlichen Komponenten mit Bezug zu Wasserstroff, die sich downstream von diesen Absperreinrichtungen, das heißt in Blickrichtung auf die Speichereinrichtungen vor den Absperreinrichtungen befinden, sind volumetrisch klein und entsprechend von den Speichereinrichtungen abgetrennt. Dies inkludiert unter anderem Komponenten wie. Kompressor, Rückschlagventile, diverse Magnetventile, Druckminderer, und dergleichen. Auf Grund der kleinen Volumina sowie der nicht-kontinuierlichen Betriebsweise des Energiesystems, insbesondere der Speichereinrichtungen, beispielsweise Tag/Nacht/Sommer/Winter, kann eine regelmäßige Dichtheitsprüfung erfolgen. Leckagen können so im überwachten Bereich genau und quantitativ ermittelt werden. Die gefahrdrohende Menge ist aufgrund der Absperreinrichtungen stark reduziert. Bei Überschreitung eines Leckagegrenzwertes kann eine Ventileinrichtung, beispielsweise ein Magnetventil, in zentraler Lage - vergleiche hierzu auch die Ausführungen zur Entspannung des Innensystems weiter oben - zum sicherheitsgerichteten Entspannen des Wasserstoffsystems angesteuert werden. Eine Gefährdung durch die Bildung einer explosionsfähigen Atmosphäre kann, vorzugsweise präventiv, vermieden werden. Das Außensystem weist im Bereich der Abgabestelle bevorzugt eine definierte Ex-Zone 2 auf.

Durch die definierte Ex-Zone 2 im Bereich des Außensystems kann die im überwachten Bereich befindliche Wasserstoffmenge zu jedem Zeitpunkt, insbesondere im Gefährdungsfall, sicher abgeführt werden.

Das Verfahren gemäß dem zweiten Aspekt der Erfindung weist eine Reihe von Vorteilen auf. So ergeben sich reduzierte technische Dichtheits-Anforderungen an sämtliche Komponenten im überwachten Bereich. Leckageüberwachung und reaktive Maßnahme gewährleisten einen primären Explosionsschutz. Durch die Automatisierung entstehen eine reduzierte Abhängigkeit von organisatorischen Maßnahmen sowie ein reduzierter händischer Prüfaufwand. Eine Gefährdung durch spontane und hohe Leckagen kann in direkter Reaktion, durch Druckreduktion, reduziert werden.

Die diskontinuierliche Betriebsweise des System ermöglicht eine quasikontinuierliche Dichtheitsprüfung. Dichtheitsprüfung und Druckentlastung stellen einen primären Explosionsschutz in dem komplexen Speichersystem dar.

Wasserstofferzeugung und Wasserstoffverbrauch sind weitestgehend diskontinuierliche Vorgänge. Entsprechend können die Stillstände zwischen den Prozessen beziehungsweise wechselnde Prozesse genutzt werden, um die Dichtheit der wasserstoffführenden Leitungen, Armaturen und Komponenten zu überprüfen.

Die unterschiedlichen Betriebszustände sind folgende:
- Wasserstoffproduktion im Elektrolysebetrieb und Speicherung des erzeugten Wasserstoffs in den Mitteldruckspeicher
- Wasserstoffproduktion in den Mitteldruckspeicher mit Kompression in den Hochdruckspeicher
- Wasserstoffverbrauch im Brennstoffzellenbetrieb
- Ruhezustand
- Wasserstoffabgabe aus Innensystem und Leitungsbus
- Wasserstoffabgabe aus dem Gesamtsystem, beispielsweise inklusive Kompressor

In den unterschiedlichen Betriebszuständen kann jeweils in den Bereichen, die für die jeweiligen Prozesse nicht benötigt werde, eine Dichtheitsprüfung erfolgen. Hierfür wird beispielsweise der Druckabfall über die Zeit ermittelt. Werden in den unterschiedlichen Bereichen Leckagen oder kritischen Leckagen detektiert, kann der Betrieb unmittelbar gesperrt werden, um die kritischen Wasserstoffmengen zu minimieren. Zudem kann die in dem spezifischen Abschnitt befindliche Menge Wasserstoff gezielt über eine Abgabestelle abgeführt werden.

In einer Ausführungsform erfolgt die Überprüfung bei dem Verfahren gemäß dem ersten Aspekt der Erfindung und/oder bei dem Verfahren gemäß dem zweiten Aspekt der Erfindung, ob eine über einem definierten Grenzwert liegende Leckage vorliegt und/oder eine Dichtheitsprüfung in der/den Komponente(n) in Bezug auf Wasserstoff, mittels einer Ermittlung des Druckabfalls über die Zeit. Während des Betriebs des Energiesystems sind die Komponenten im ersten Wasserstoffsystem des Innensystems und im zweiten Wasserstoffsystem des Außensystems, beispielsweise die entsprechenden Verbindungsleitungsabschnitte, aber auch der Leitungsbus als Verbindung zwischen den entsprechenden Leitungsabschnitten, mit Wasserstoff bei einem erhöhten Druck gefüllt. Beim Vorhandensein einer Leckage wird der Druck mit der Zeit abfallen. Aus der Druckdifferenz, multipliziert mit dem Volumen und dividiert durch die Meßzeit, kann beispielsweise dann die Leckrate errechnet werden, was vorzugsweise in der Steuereinrichtung erfolgt.

Gemäß dem dritten Aspekt der Erfindung wird ein Energiesystem, insbesondere ein Gebäudeenergiesystem, bereitgestellt, welches die Merkmale des unabhängigen Patentanspruchs 12 aufweist. Das Energiesystem weist zunächst die weiter oben beschriebenen Grundmerkmale auf, so dass an dieser Stelle auch auf die diesbezüglichen Ausführungen, ebenso wie auf die allgemeine Beschreibung der Erfindung, weiter oben vollinhaltlich Bezug genommen und verwiesen wird.

Erfindungsgemäß ist das Energiesystem dadurch gekennzeichnet, dass zur Vermeidung der Bildung einer explosionsfähigen Atmosphäre im Energiesystem bei Auftreten eines Störfalls, das Energiesystem zur Ausführung eines Verfahrens gemäß dem ersten Erfindungsaspekt und/oder gemäß dem zweiten Erfindungsaspekt ausgebildet ist, oder dass ein Verfahren gemäß dem ersten Erfindungsaspekt und/oder gemäß dem zweiten Erfindungsaspekt ausgeführt wird. Zur Vermeidung von Wiederholungen wird an dieser Stelle deshalb auch auf die entsprechenden Ausführungen zum ersten und zweiten Erfindungsaspekt vollinhaltlich Bezug genommen und verwiesen.

Gemäß einer Ausführungsform weist das Energiesystem eine Steuereinrichtung auf, die zur Durchführung der erfindungsgemäßen Verfahren gemäß dem ersten und zweiten Erfindungsaspekt eingerichtet ist. Auch diesbezüglich wird zur Vermeidung von Wiederholungen an dieser Stelle deshalb auch auf die entsprechenden Ausführungen zum ersten und zweiten Erfindungsaspekt vollinhaltlich Bezug genommen und verwiesen.

In einer Ausführungsform ist der Speichereinrichtung im zweiten Leitungsabschnitt des Außensystems wenigstens eine Ventileinrichtung zugeordnet. Die Ventileinrichtungen, bei denen es sich bevorzugt um automatische Absperreinrichtungen, beispielsweise Magentventile, handelt, sind fluidtechnisch möglichst nahe an der Speichereinrichtung, beispielsweise der Hochdruckspeichereinrichtung und/der der Mitteldruckspeichereinrichtung, positioniert.

In einer Ausführungsform sind der zweite Leitungsabschnitt und die Komponenten in Bezug auf Wasserstoff des Außensystems strömungstechnisch vor der Ventileinrichtung volumetrisch klein ausgebildet. Vorzugsweise sind der zweite Leitungsabschnitt im Außensystem und sämtliche Komponente, die Bezug zu Wasserstoff haben, downstream von dieser Ventileinrichtung volumetrisch klein und entsprechend von der Speichereinrichtung abgetrennt. Dies inkludiert unter anderem auch Kompressor, Rückschlagventile, diverse Magnetventile und Druckminderer. Auf Grund der kleinen Volumina sowie der nicht-kontinuierlichen Betriebsweise des Energiesystems, etwa gemäß dem zweiten Aspekt der Erfindung, kann eine regelmäßige Dichtheitsprüfung erfolgen, die im Rahmen des zweiten Aspekts der Erfindung beschrieben ist.

Zudem kann das Energiesystem weitere Komponenten umfassen. Beispielsweise kann das Energiesystem eine Lüftungseinrichtung aufweisen und/oder mit einer Wärmepumpeneinrichtung verbunden sein. Die Wärmepumpeneinrichtung ist bevorzugt als eine Luft/Luft,-Wärmepumpe, insbesondere eine Abluft/Luft-Wärmepumpe, oder als eine Luft/Wasser-Wärmepumpe oder als eine Abluft/Wasser-Wärmepumpe ausgebildet. Wärmepumpen an sich sind im Stand der Technik bekannt und dem Fachmann geläufig.

Bei dem Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt.

In einer bevorzugten Ausführungsform handelt es sich bei dem Energiesystem um ein Gebäudeenergiesystem. Gebäudeenergiesysteme sind grundsätzlich aus dem Stand der Technik bekannt und dienen der Versorgung von Gebäuden, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Gebäudeenergiesystem schafft die Grundlage dafür, dass der Energiebedarf eines Gebäudes, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Gebäudes im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Gebäudeenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Gebäudeenergiesystem der genannten Art die folgenden Grundmerkmale auf:
- einen DC-Einspeisepunkt, bevorzugt ausgebildet für eine Nenn-Spannung von 48 Volt oder für eine Nennspannung zwischen 200 und 1000 Volt und/oder einem AC-Einspeisepunkt, bevorzugt ausgebildet für eine Spannung von 230 Volt oder 110 Volt oder einer 3-phasigen Einspeisung bei pro Phase 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt oder mit dem AC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Das Energiesystem kann als reines Innensystem aufgestellt werden und saugt die Luft im Aufstellraum an und gibt diese auch wieder in den selbigen ab. Das Energiesystem kann vorzugsweise auch mit einer zentralen Gebäuderaumlüftung verbunden sein, oder Bestandteil einer zentralen Gebäuderaumlüftung sein oder eine zentrale Gebäuderaumlüftung aufweisen.

Mit dem erfindungsgemäßen Energiesystem wurde die Möglichkeit geschaffen, die Abwärmen und eventuellen Wasseranteile entweder in die Abluft, die Zuluft, die Außenluft oder ungenutzt der Fortluft beizumischen, oder aber diese für weitere Prozesse zur Verfügung zu stellen. In der Abluftvariante besteht demzufolge die Möglichkeit auf einen separaten Abluftventilator zu verzichten. Diese Form des Energiesystems ist eine sogenannte Direktwärmenutzung, also beim Auftreten der Abwärme wird diese bedarfsgerecht direkt genutzt oder in die Fortluft geleitet.

Eine Erweiterung des Energiesystems stellt hierbei die Verwendung einer Wärmepumpe, insbesondere einer Luft-Wärmepumpe, dar. Hierbei handelt es sich insbesondere um eine Kältemaschine, mit umschaltbaren Wärmetauschern bei Dualbetrieb von Energiequellen aus gezielter Temperierung der Außenluft des Lüftungsgerätes oder der Verwendung von Außenluft und/oder Fortluft des Lüftungsgerätes. Dadurch besteht die zeitliche Entkopplung aus regenerativer Energiebereitstellung aus den Abwärmen der wirkungsgradbehafteten Elektrolyse oder der Brennstoffzelle, um diese Energiequellen zur Anhebung der Arbeitszahl der Kältemaschine sinnvoll zu nutzen und in einem Warmwasserspeicher und/oder Heizungspufferspeicher zwischen zu speichern. Dies wird als thermische, regenerative Kurzzeitspeicherung bezeichnet.

Bei einer Aussenluftverschaltung ist die Vorerwärmung der Außenluft zur Reduzierung der Auftaufunktion des Lüftungsgerätes ein Vorteil, bei Überwärme durch die Wasserstoffmodule können so auch bivalent die Abwärmen aus der gemischten Außenluft und parallel aus der gemischten Fortluft des Lüftungsgerätes in Warmwasserspeichern/Heizungspufferspeichern bedarfsgerecht gespeichert werden.

Die Erfindung wird nun anhand verschiedener Ausführungsbeispiele unter Bezugnahme auf die beiliegenden Zeichnungen näher erläutert. Es zeigen
- Figur 1: in schematischer Ansicht ein Energiesystem, in dem die vorliegende Erfindung realisiert ist;
- Figur 2: in schematischer Ansicht eine Rahmenbedingung für die Umsetzung der vorliegenden Erfindung;
- Figur 3: ein Ausführungsbeispiel des Energiesystems als Grundlage für die Erläuterung der verschiedenen erfindungsgemäßen Verfahren; und
- Figuren 4 bis 8: verschiedene Betriebszustände des Energiesystems, anhand derer die erfindungsgemäßen Verfahren erläutert werden.

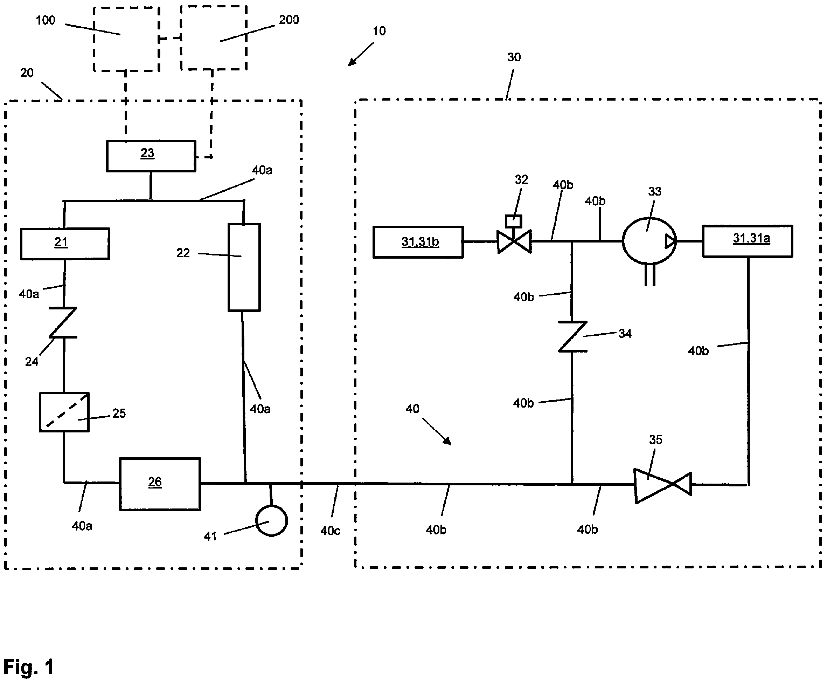

In Figur 1 wird zur Verdeutlichung des Hintergrunds der vorliegenden Erfindung und zur Einbettung der Erfindung in einem Energiesystem zunächst ganz allgemein ein Energiesystem 10 vorgestellt und beschrieben, in dem die vorliegende Erfindung verwirklicht ist.

Gemäß Figur 1 weist das Energiesystem 10 zunächst ein erstes Untersystem auf, welches als Innensystem 20 ausgebildet ist. Das bedeutet, dass sich das erste Untersystem innerhalb des Gebäudes befindet. Zusätzlich weist das Energiesystem 10 ein zweites Untersystem in Form eines Außensystems 30 auf. Das bedeutet, dass sich das zweite Untersystem außerhalb des Gebäudes befindet.

Das Innensystem 20 weist eine Elektrolyseeinrichtung 21 zur Herstellung von Wasserstoff auf. Zudem weist das Innensystem 20 eine Brennstoffzelleneinrichtung 22 auf. Beide Komponenten sind Bestandteile eines ersten Wasserstoffsystems des Innensystems 20.

Das Außensystem 30 weist eine Speichereinrichtung 31 auf, die über eine Hochdruckspeichereinrichtung 31a verfügt. In der Hochdruckspeichereinrichtung 31a wird der erzeugte Wasserstoff bei bis zu 700 bar gespeichert. Zusätzlich verfügt die Speichereinrichtung 31 über eine Mitteldruckspeichereinrichtung 31b, in der der erzeugte Wasserstoff bei Drücken zwischen 20 und 60 bar zwischengespeichert wird, bevor er von dort endgültig in der Hochdruckspeichereinrichtung 31a gespeichert wird. Die Speichereinrichtung 31, 31a, 31b ist im gezeigten Beispiel Bestandteil eines zweiten Wasserstoffsystems des Außensystems 30.

Die einzelnen Komponenten des Energiesystems 10 sind über eine Verbindungsleitungseinrichtung 40 miteinander verbunden, die aus einer Anzahl unterschiedlicher Leitungsabschnitte 40a, 40b, 40c besteht. Die Leitungsabschnitte 40a sind dem Innensystem 20 zugeordnet und stellen insoweit einen Bestandteil des ersten Wasserstoffsystems im Innensystem 20 dar. Die Leitungsabschnitte 40b sind dem Außensystem 30 zugeordnet und stellen insoweit einen Bestandteil des zweiten Wasserstoffsystems im Außensystem 20 dar. Verbunden ist der erste Leitungsabschnitt 40a mit dem zweiten Leitungsabschnitt 40b über einen Leitungsbus 40c.

Zum Spülen der Elektrolyseeinrichtung 21 und/oder der Brennstoffzelleneinrichtung 22 ist eine Spüleinrichtung 23 mit einer Spülkammer vorgesehen, die über einen Teilabschnitt des ersten Leitungsabschnitts 40a mit den beiden vorgenannten Komponenten verbunden ist.

Der in der Elektrolyseeinrichtung 21 mittels Elektrolyse hergestellte Wasserstoff verlässt die Elektrolyseeinrichtung 21 über einen Teilabschnitt des ersten Leitungsabschnitts 4. In dem Teilabschnitt des ersten Leitungsabschnitts 40a befinden sich in Strömungsrichtung des erzeugten Wasserstoffs eine Rückschlagventileinrichtung 24 sowie nachfolgend eine Filtereinrichtung 25 und eine Trocknereinrichtung 26, in denen der erzeugte Wasserstoff gefiltert und getrocknet wird. Die Filtereinrichtung 25 und die Trocknereinrichtung 26 können sich alternativ auch im Außensystem 30 befinden.

Von der Trocknereinrichtung 26 strömt der erzeugte Wasserstoff über den Leitungsbus 40c und den zweiten Leitungsabschnitt 40b zu einer weiteren Rückschlagventileinrichtung 34. Von dort strömt der erzeugte Wasserstoff über einen Teilabschnitt des zweiten Leitungsabschnitts 40b in den Mitteldruckspeicher 31b, welcher über eine Ventileinrichtung 32, die insbesondere als Sperrventil, beispielsweise in Form eines Magnetventils, ausgebildet ist. In einem Teilabschnitt des zweiten Leitungsabschnitts 40b, der in der Hochdruckspeichereinrichtung 31a endet, befindet sich vor der Hochdruckspeichereinrichtung 31a eine Kompressoreinrichtung 33, insbesondere in Form eines Kolbenkompressors. Über die Kompressoreinrichtung 33 wird der erzeugte Wasserstoff in die Hochdruckspeichereinrichtung 31a eingespeichert. Der in der Mitteldruckspeichereinrichtung 31b zwischengespeicherte Wasserstoff wird unter Betätigung der Kompressoreinrichtung 33 in der Hochdruckspeichereinrichtung 31a eingespeichert.

Dieser Herstellungsvorgang des Wasserstoffs bis hin zu dessen Einspeicherung in der Hochdruckspeichereinrichtung 31a stellt eine erste Betriebsweise des Energiesystems 10 dar. Bei dieser ersten Betriebsweise des Energiesystems 10 herrscht in der Verbindungsleitungseinrichtung 40 ein Druck von 20 bis 60 bar. Ein solcher Druck herrscht auch im Mitteldruckspeicher 31b. Über die Kompressoreinrichtung 33 wird der aus der Mitteldruckspeichereinrichtung 31b, bei der es sich um einen Zwischenspeicher handelt, entnommene Wasserstoff so weit komprimiert, dass er mit Drücken von bis zu 700 bar in der Hochdruckspeichereinrichtung 31a eingespeichert werden kann.

Der in der Hochdruckspeichereinrichtung 31a gespeicherte Wasserstoff wird für den Betrieb der Brennstoffzelleneinrichtung 22 verwendet. Der Betrieb der Brennstoffzelleneinrichtung 22 erfolgt in der zweiten Betriebsweise des Energiesystems 10. Die Brennstoffzelleneinrichtung 22 kann aber nur bei Drücken kleiner 20 bar arbeiten. In der zweiten Betriebsweise des Energiesystems 10 wird der Wassersoff über einen Teilabschnitt des zweiten Leitungsabschnitts 40b aus der Hochdruckspeichereinrichtung 31a entnommen, über eine Entspannungseinrichtung 35 in Form eines Druckminderers auf den erforderlichen Druck entspannt und über einen Teilabschnitt des zweiten Leitungsabschnitts 40b in den Leitungsbus 40c, der einen bidirektionalen Leitungsabschnitt darstellt, transportiert, von wo aus er über einen Teilabschnitt des ersten Leitungsabschnitts 40a in die Brennstoffzelleneinrichtung 22 eintritt. Zur Messung des Drucks ist wenigstes eine Druckmesseinrichtung 41, beispielsweise in Form eines Drucksensors vorgesehen.

Der Betrieb der Brennstoffzelleneinrichtung 22 erfordert zudem die Zufuhr von Luft. Diese dient zum einen als Reaktand, vorzugsweise gleichzeitig auch zur Kühlung. Ähnliches gilt auch für die Elektrolyseeinrichtung 21. Denn beim Betrieb der Brennstoffzelleneinrichtung 22 und der Elektrolyseeinrichtung 21 entsteht Wärme, die in Form von Abwärme abgeführt und für weitere Prozesse genutzt werden kann.

Das in Figur 1 dargestellte Energiesystem 10 stellt einen Teilbereich eines Gesamt-Gebäudeenergiesystems dar, bei dem es sich um ein optional elektrisch autarkes und vollständig auf erneuerbaren Energien beruhendes multihybrides Gebäudeenergiespeichersystem handelt. Eine Kopplung des Energiesystems mit dem elektrischen Netz zur optionalen Einspeisung und Bezug elektrischer Energie kann über einen netzgekoppelten Wechselrichter ist möglich.

Das multihybride Gebäudeenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei kann das System als Inselsystem unabhängig vom elektrischen Netz oder aber bei Netzausfällen als Ersatzstromversorgung betrieben werden. Die Anlage kann auch die elektrische Autarkie des Gebäudes gewährleisten, sodass über das ganze Jahr hinweg keine elektrische Energie aus dem Stromnetz bezogen werden muss.

Die primäre Aufgabe des Gebäudeenergiesystems ist es, die gewonnene elektrische Energie aus Photovoltaik (PV)-Modulen oder dergleichen dem Verbraucher im Gebäude verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Raumlüftung durch eine verbaute Lüftungseinrichtung 100. Bei Brennstoffzellenbetrieb kann die Abwärme des Brennstoffzellenmoduls über die kontrollierte Raumlüftung direkt als Wärme an die Frischluft und damit an die Räume abgegeben werden.

Der in der Elektrolyseeinrichtung 21 produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleneinrichtung 22 den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung 22.

Das gesamte System wird über ein zentrales elektronisches Steuergerät, den "Energy Manager" mit einem prädiktiven Energiemanagement derart gesteuert, dass übers Jahr gesehen der Nutzungsgrad der regenerativen Energie, z.B. PV-Energie und/oder Windenergie, bei minimaler Größe der installierten Energiewandler und Energiespeicher optimiert wird. Über den Energy Manager sowie über den Wechselrichter, insbesondere in der Ausführung eines Hybridwechselrichters, welcher die Schnittstelle zwischen PV-Anlage, Energiesystem 10, Batteriespeicher, externem Stromnetz und den elektrischen Verbrauchern im Gebäude darstellt, wird auch die Netzankopplung, insbesondere Netzbezug und Netzeinspeisung optimiert.

Das zweite Untersystem ist prinzipiell für den Betrieb im Außenbereich vorgesehen, kann aber unter bestimmten Bedingungen auch innerhalb eines speziellen Bereichs des Gebäudes errichtet und betrieben werden.

Das Energiesystem 10 kann zur effektiven Nutzung einzelner Komponenten oder zur Weiterverwertung einzelner Prozessprodukte mit anderen Systemen oder Teilsystemen verbunden sein. Bei einem dieser weiteren Systeme handelt es sich beispielsweise um eine Lüftungseinrichtung 100. Oder aber es handelt sich um eine Wärmepumpeneinrichtung 200.

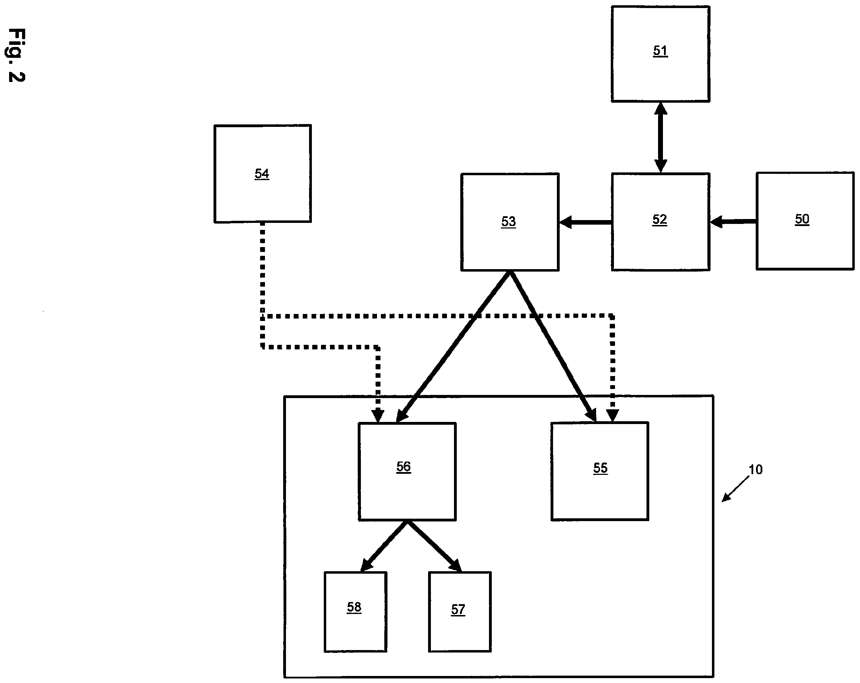

Figur 2 zeigt in schematischer Ansicht eine Rahmenbedingung für die Umsetzung der vorliegenden Erfindung im Energiesystem 10. Strom wird über eine Photovoltaikeinrichtung 50 erzeugt und an einen Wechselrichter 52 geleitet. Von dort wird der Strom in einer Batterie 51 zwischengespeichert und/oder an ein Versorgungsnetzteil 53 geleitet, von wo der Strom im normalen ungestörten Betrieb des Energiesystems beispielsweise zu einer Steuereinrichtung 56 gelangt, welche Ventileinrichtungen 57 und Sensoreinrichtungen 58 steuert. Zudem wird mit dem Strom auch eine Lüftungseinrichtung 55 betrieben. Sofern es zu ungewollten Stromausfällen kommt, ist eine Notstromversorgungseinrichtung 54 vorgesehen.

In der Elektrolyseeinrichtung 21, der Trocknereinrichtung 26 sowie im Leitungsbus 40c, wie aus Figur 1 ersichtlich ist, befindet sich im Regelbetrieb des Energiesystems 10 immer Wasserstoff. Der Elektrolysestack der Elektrolyseeinrichtung 21 verliert im Betrieb und im Stillstand Wasserstoff über die Kathode. Dieser Wasserstoff wird durch die dauerhafte technische Lüftung mittels der Lüftungseinrichtung 55 des verdünnt. Ein Ausfall der Batterie 51, des Wechselrichters 52 oder des Versorgungsnetzteils 53 würde zum Ausfall der Lüftungseinrichtung 55 führen. In Folge könnte sich eine explosionsfähige Atmosphäre im Energiesystem 10 ausbilden. Um diesen Zustand zu vermeiden, ist eine Notstromversorgungseinrichtung 54 erforderlich, die den Lüftungsvolumenstrom aufrecht erhält.

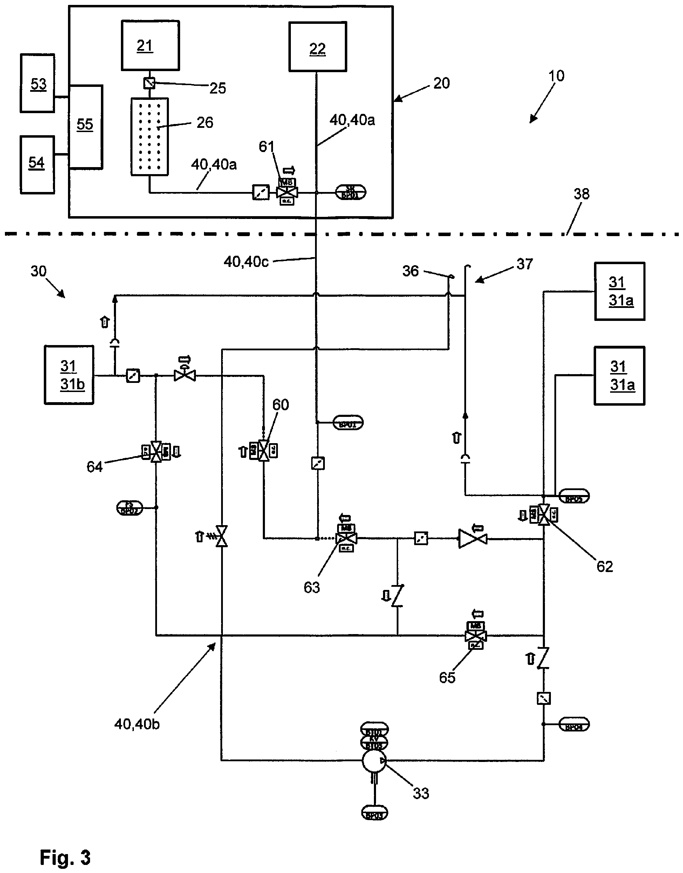

Figur 3 zeigt ein Ausführungsbeispiel des Energiesystems 10 im Ruhezustand, welches als Grundlage für die Erläuterung der verschiedenen erfindungsgemäßen Verfahren dient. Das Energiesystem basiert auf dem in Figur 1 dargestellten und beschriebenen Energiesystem 10, so dass gleiche Bauteile mit identischen Bezugsziffern versehen ist.

Dargestellt ist wieder, dass das Energiesystem 10 ein Innensystem 20 und ein Außensystem 30 aufweist. Im Innensystem 20 befinden sich die Elektrolyseeinrichtung 21 und die Brennstoffzelleneinrichtung 22, die über einen ersten Leitungsabschnitt 40b der Verbindungsleitungseinrichtung 40 verbunden sind. Eine Lüftungseinrichtung 55, die zur Erzeugung eines Luftstroms dient, welcher bei Leckagen austretenden Wasserstoff verdünnt, ist sowohl mit einem Versorgungsnetzteil 53 für den bestimmungsgemäßen Gebrauch und mit einer Notstromversorgungseinrichtung 54 verbunden, falls es zu einem unerwünschten Stromausfall kommt. Der in der Elektrolyseeinrichtung 21 erzeugte Wasserstoff durchläuft eine Filtereinrichtung 25 und eine Trocknereinrichtung 26, bevor er, durch den ersten Leitungsabschnitt 40a strömend, über eine erste Ventileinrichtung 61 das Innensystem 20 verlässt und über einen Leitungsbus 40c der Verbindungsleitungseinrichtung 40 in das Außensystem 30 eintritt. Der Leitungsbus 40c liegt somit im Bereich der Grenze 38 zwischen Innensystem 20 und Außensystem 30.

Das Außensystem 30 verfügt über den zweiten Leitungsabschnitt 40b, der über den Leitungsbus 40c mit dem ersten Leitungsabschnitt 40a des Innensystems 20 verbunden ist. Dem Außensystem 30 zugeordnet ist eine Speichereinrichtung 31 zum Speichern des erzeugten Wasserstoffs. Die Speichereinrichtung 31 verfügt über eine Mitteldruckspeichereinrichtung 31b und zwei Hochdruckspeichereinrichtungen 31a. Die Speichereinrichtung 31 ist entweder Bestandteil des Außensystems 30, oder aber das Außensystem 30 weist entsprechende Schnittstellen zu der Speichereinrichtung 31 auf. In unmittelbarer Nähe vor der Mitteldruckspeichereinrichtung 31b ist eine vierte Ventileinrichtung 64 angeordnet, während in unmittelbarer Nähe vor der Hochdruckspeichereinrichtung 31a eine zweite Ventileinrichtung 62 angeordnet ist. In dem zweiten Leitungsabschnitt 40b ist eine zentrale Ventileinrichtung 60 angeordnet. In dem zweiten Leitungsabschnitt 40b befinden sich zudem eine Kompressoreinrichtung 33 sowie zwei weitere Ventileinrichtungen 63 und 65. Bei den verschiedenen Ventileinrichtungen handelt es sich vorzugsweise um Absperrventile, beispielsweise Magnetventile.

Das Außensystem 30 verfügt über eine Abgabestelle 36, die sich in einer Ex-Zone-2 37 befindet, und über die Wasserstoff aus dem Außensystem 30 abgegeben werden kann.

In Figur 3 wird nur auf diejenigen Komponenten des Energiesystems 10 eingegangen, die für die Durchführung der erfindungsgemäßen Verfahren relevant sind.

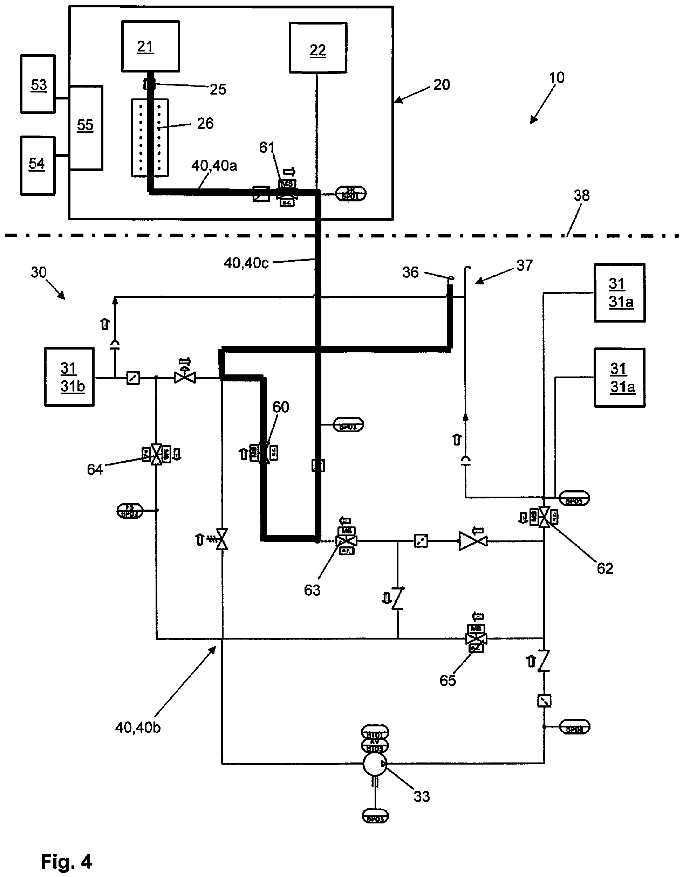

In Figur 4 ist das Energiesystem 10 gemäß Figur 3 dargestellt, wobei anhand der Figur 4 der Ablauf des Verfahrens gemäß dem ersten Aspekt der Erfindung erläutert wird. Gemäß dem ersten Aspekt der Erfindung wird ein sicherer druckloser Zustand im Innensystem 20 geschaffen, wobei eine Wasserstoffabgabe aus dem Innensystem 20 und den über den Leitungsbus 40c, in das Außensystem 30 und dort an die Abgabestelle 36 erfolgt. Der Strömungsverlauf des Wasserstoffs ist in Figur 4 durch eine fett dargestellte Linie dargestellt. Wenn in dem Energiesystem ein Störfall auftritt, etwa wenn die Lüftungseinrichtung 55 ausfällt, wird das erste Wasserstoffsystem im Innensystem 20, insbesondere automatisiert, sicherheitsgerichtet entspannt, indem im ersten Wasserstoffsystem des Innensystems 20 befindlicher Wasserstoff aus dem Innensystem 20 über den Leitungsbus 40c in das Außensystem 30 und dort zur Abgabestelle 36 transportiert wird. Wenn die Lüftungseinrichtung 55, beispielsweise aufgrund eines Stromausfalls, ausfällt, verfügt das Energiesystem 10 über eine Notstromversorgungseinrichtung 54. Wenn die Notstromversorgungseinrichtung 54 aktiviert ist, aktiviert sie die erforderlichen Komponenten in Bezug auf Wasserstoff im Innensystem 30, hier die erste Ventileinrichtung 61, über die eine sicherheitsgerichtete Entspannung erfolgt.

In der Elektrolyseeinrichtung 21, in der Trocknereinrichtung 26 sowie in dem ersten Leitungsabschnitt 40a und auch im Leitungsbus 40c befindet sich im Regelbetrieb immer Wasserstoff. Der Elektrolysestack der Elektrolyseeinrichtung 21 verliert im Betrieb und im Stillstand Wasserstoff, beispielsweise über die Kathode. Dieser Wasserstoff wird in der Regel mittels eines durch die Lüftungseinrichtung 55 erzeugten Luftstroms verdünnt. Ein Ausfall der Stromzufuhr, beispielsweise des Versorgungsnetzteils 53, führt zum Ausfall der Lüftungseinrichtung 53. In Folge kann sich eine explosionsfähige Atmosphäre im Innensystem 20 ausbilden. Um diesen Zustand zu vermeiden, ist die Notstromversorgungseinrichtung 54 vorgesehen, die den Lüftungsvolumenstrom aufrecht erhält. Um die Notstromversorgung möglichst klein auslegen zu können, beispielsweise um einen möglichst kurzen Lüftungsbedarf zu erzeugen, wird gemäß dem Verfahren des ersten Erfindungsaspekts der in der Elektrolysevorrichtung 21 befindliche Druck aktiv reduziert. Hierfür ist insbesondere die erste Ventileinrichtung 61 und insbesondere auch eine zentrale Ventileinrichtung 60 in dem Außensystem 30 vorgesehen. Durch den Leitungsbus 40c zwischen Innensystem 20 und Außensystem 30 kann der Wasserstoff sicher über die Abgabestelle 36 im Außensystem 30 abgeführt werden. Nach dem Abführen des Wasserstoffs besteht kein weiterer Lüftungsbedarf mehr im Innensystem 20. Die Notstromversorgungseinrichtung 54 kann dann deaktiviert werden.

Die Steuerung der einzelnen Komponenten erfolgt vorzugsweise über eine Steuereinrichtung, die in Figur 4 nicht explizit dargestellt ist. Wenn von der Steuereinrichtung der Ausfall der Lüftungseinrichtung 55 erfasst wird, aktiviert die Steuereinrichtung automatisch die Notstromversorgungseinrichtung 54 sowie die erforderlichen Komponenten des Innensystems 20 und des Außensystems 30, hier die erste Ventileinrichtung 61 und die zentrale Ventileinrichtung 60, sodass der im ersten Wasserstoffsystem des Innensystems 20 befindliche Wasserstoff aus dem Innensystem 20 über den Leitungsbus 40c in das Außensystem 30 und zur Abgabestelle 36 befördert wird, wobei die Steuereinrichtung nach Abführung des Wasserstoffs über die Abgabestelle 36 die Notstromversorgungseinrichtung 54, und optional die Ventileinrichtungen 60, 61 deaktiviert.

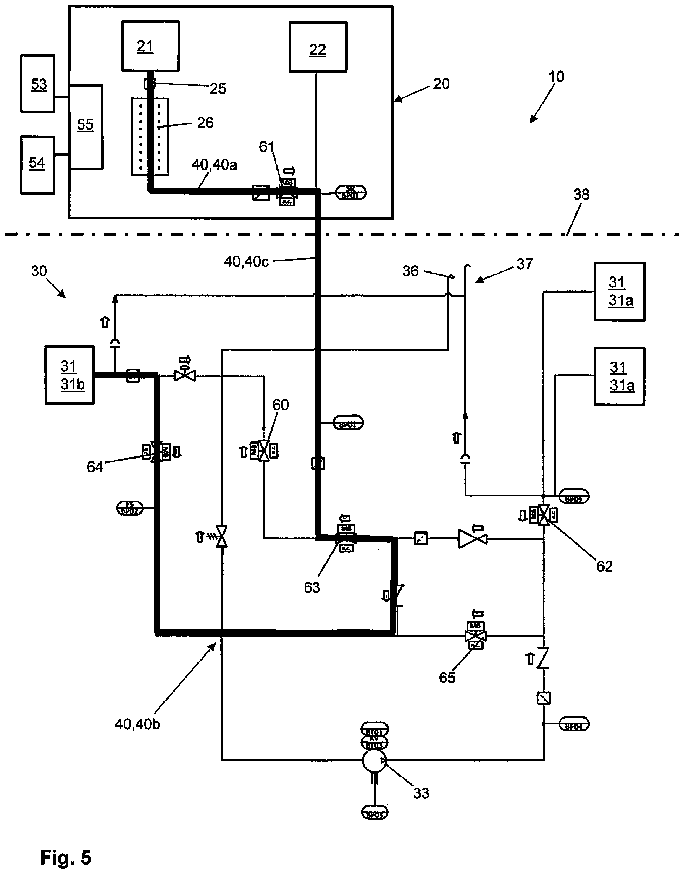

In den Figuren 5 bis 8 ist das Energiesystem 10 gemäß Figur 3 dargestellt, wobei anhand der Figuren 5 bis 8 der Ablauf des Verfahrens gemäß dem zweiten Aspekt der Erfindung erläutert wird. Gemäß dem zweiten Aspekt der Erfindung wird ein Explosionsschutz durch Dichtheitsprüfung und Druckentlastung im Außensystem 30 geschaffen. Das Energiesystem 10 wird üblicherweise in einer diskontinuierlichen Betriebsweise betrieben, in welcher aufgrund wechselnder Prozesse einzelne Komponenten in Bezug auf Wasserstoff im ersten Wasserstoffsystem im Innensystem 20 und/oder im zweiten Wasserstoffsystem im Außensystem 30 zeitweilig nicht benutzt werden. Nun wird, insbesondere automatisiert, in denjenigen Komponenten, die nicht benutzt werden, eine Dichtheitsprüfung durchgeführt. Dies kann wiederum über eine Steuereinrichtung (in den Figuren 5 bis 8 nicht explizit dargestellt) des Energiesystems 10 erfolgen. Wenn die Steuereinrichtung Informationen darüber erfasst oder Informationen empfängt, dass eine Komponente oder ein Teilbereich des Außensystems 30 aktuell nicht benutzt wird, kann die Steuereinrichtung dort eine Dichtheitsprüfung initiieren.

Beispielsweise kann, wenn anhand der Dichtheitsprüfung detektiert wird, dass eine über einem definierten Grenzwert liegende Leckage vorliegt, das erste Wasserstoffsystem im Innensystem 20 und/oder das zweite Wasserstoffsystem im Außensystem 30 gesperrt werden. Dies erfolgt bevorzugt über die Steuereinrichtung. Oder aber, es kann die zentrale Ventileinrichtung 60, aktiviert werden, vorzugsweise über die Steuereinrichtung, sodass der im zweiten Wasserstoffsystem des Außensystems 30 befindliche Wasserstoff aus dem Außensystem 30 über den zweiten Leitungsabschnitt 40b zur Abgabestelle 36 transportiert wird.

Wie in den Figuren 5 bis 8 dargestellt ist, sind die zweite Ventileinrichtung 62 und die vierte Ventileinrichtung 64 fluidtechnisch möglichst nahe an den großen Speichereinrichtungen 31, 31a, 31b positioniert. Der zweite Verbindungsleitungsabschnitt 40b im Außensystem 30 und sämtliche darin befindlichen Komponenten mit Bezug zu Wasserstroff, die sich downstream von diesen Absperreinrichtungen 62, 64, das heißt in Blickrichtung auf die Speichereinrichtungen 31a, 31b vor den Absperreinrichtungen 62, 64 befinden, sind volumetrisch klein und entsprechend von den Speichereinrichtungen 31a, 31b abgetrennt. Aufgrund der kleinen Volumina sowie der nicht-kontinuierlichen Betriebsweise des Energiesystems 10, insbesondere der Speichereinrichtungen 31a, 31b, beispielsweise Tag/Nacht/Sommer/Winter, kann eine regelmäßige Dichtheitsprüfung erfolgen. Leckagen können so im überwachten Bereich genau und quantitativ ermittelt werden. Bei Überschreitung eines Leckagegrenzwertes kann die zentrale Ventileinrichtung 60, beispielsweise ein Magnetventil, zum sicherheitsgerichteten Entspannen des Wasserstoffsystems angesteuert werden. Das Außensystem 30 weißt im Bereich der Abgabestelle 36 bevorzugt eine definierte Ex-Zone-2 37 auf. Hierüber kann die im überwachten Bereich befindliche Wasserstoffmenge zu jedem Zeitpunkt abgeführt werden.

Der Strömungsverlauf des Wasserstoffs ist in den Figuren 5 bis 8 für verschiedene Betriebszustände jeweils als fett dargestellte Linie dargestellt. In den unterschiedlichen Betriebszuständen kann jeweils in den nicht fett dargestellten Bereichen eine Dichtheitsprüfung erfolgen. Hierfür wird der Druckabfall über die Zeit ermittelt. Werden in den unterschiedlichen Bereichen Leckagen oder kritischen Leckagen detektiert, kann der Betrieb unmittelbar gesperrt werden, um die kritischen Wasserstoffmenge zu minimieren. Zudem kann Wasserstoff bei Bedarf gezielt über die zentrale Ventileinrichtung 60 und die Abgabestelle 36 abgeführt werden.

Figur 5 zeigt einen Betriebszustand, indem eine Wasserstoffproduktion in der Elektrolyseeinrichtung 21 im Innensystem 20 erfolgt, und der erzeugte Wasserstroff zunächst in der Mitteldruckspeichereinrichtung 31b zwischengespeichert wird.

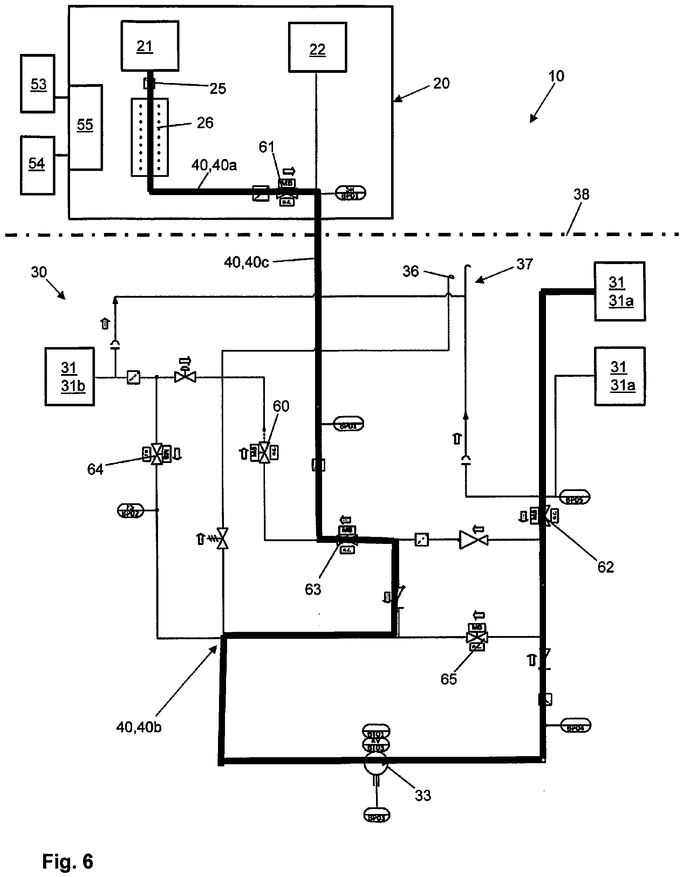

Figur 6 zeigt einen Betriebszustand, indem eine Wasserstoffproduktion in der Elektrolyseeinrichtung 21 im Innensystem 20 erfolgt, und der erzeugte Wasserstroff, mittels Kompression im Kompressor 33, in der Hochdruckspeichereinrichtung 31a gespeichert wird. Gegebenenfalls kann in einem abgewandelten Betriebszustand, der jedoch nicht explizit dargestellt ist, vorab noch eine Zwischenspeicherung in der Mitteldruckspeichereinrichtung 31b analog zu dem in Figur 5 dargestellten Betriebszustand erfolgen.

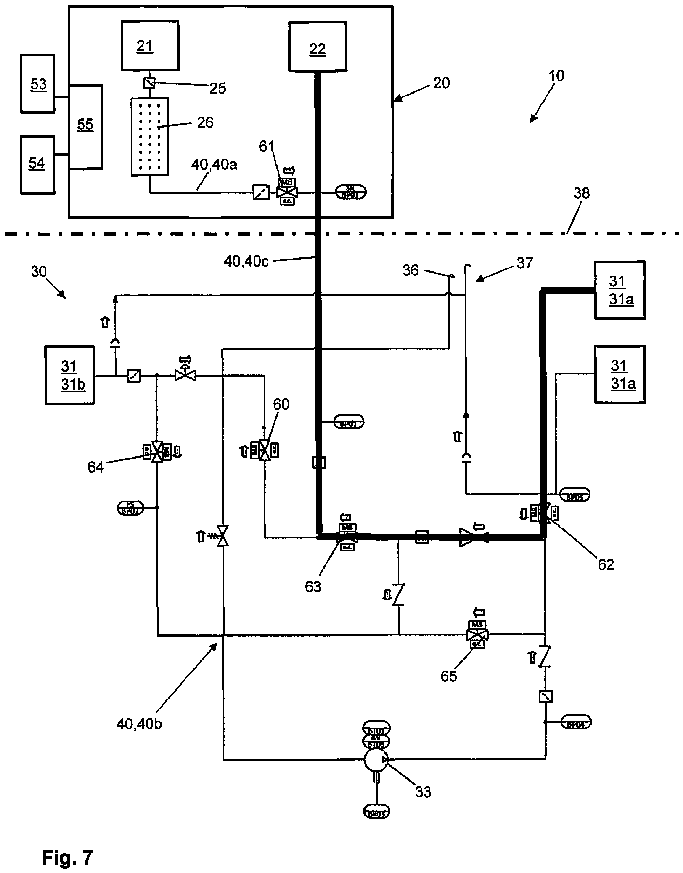

Figur 7 zeigt einen Betriebszustand, bei dem der in der Hochdruckspeichereinrichtung 31a gespeicherte Wasserstoff aus dieser entnommen und verbraucht wird, hier in der dem Innensystem 20 zugeordneten Brennstoffzelleneinrichtung 22.

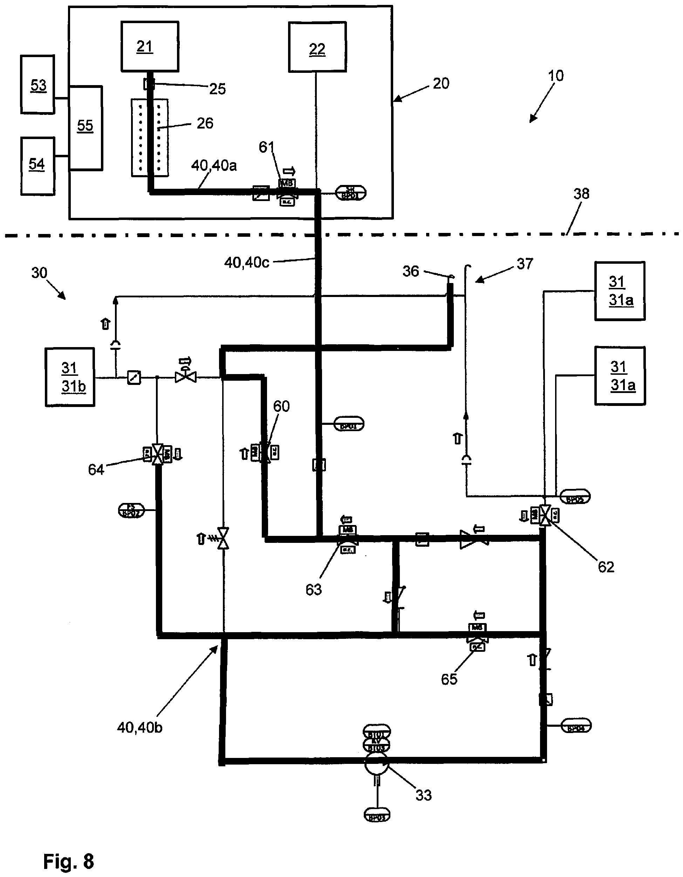

Figur 8 schließlich zeigt einen Betriebszustand in dem eine Wasserstoffabgabe über die Abgabestelle 36 aus dem Gesamtsystem, einschließlich Kompressor 33, erfolgt, um das gesamte Wasserstoff-Leitungssystem mit den angeschlossenen wasserstoffführenden Komponenten, jedoch ohne die Speichereinheiten, drucklos zu machen.

### Bezugszeichenliste

- 10: Energiesystem (Gebäudeenergiesystem)
- 20: Innensystem (Erstes Untersystem)
- 21: Elektrolyseeinrichtung
- 22: Brennstoffzelleneinrichtung
- 23: Spüleinrichtung (Spülkammer)
- 24: Rückschlagventileinrichtung
- 25: Filtereinrichtung
- 26: Trocknereinrichtung
- 30: Außensystem (Zweites Untersystem)
- 31: Speichereinrichtung
- 31a: Hochdruckspeichereinrichtung
- 31b: Mitteldruckspeichereinrichtung
- 32: Ventileinrichtung
- 33: Kompressoreinrichtung
- 34: Rückschlagventileinrichtung
- 35: Entspannungsvorrichtung (Druckminderer)
- 36: Abgabestelle
- 37: Ex-Zone-2
- 38: Grenze Innen-/Außensystem
- 40: Verbindungsleitungseinrichtung
- 40a: Erster Leitungsabschnitt
- 40b: Zweiter Leitungsabschnitt
- 40c: Leitungsbus
- 41: Druckmessvorrichtung

- 50: Photovoltaikeinrichtung
- 51: Batterie
- 52: Wechselrichter
- 53: Versorgungsnetzteil
- 54: Notstromversorgungseinrichtung
- 55: Lüftungseinrichtung
- 56: Steuereinrichtung
- 57: Ventileinrichtungen
- 58: Sensoreinrichtungen

- 60: Zentrale Ventileinrichtung
- 61: Erste Ventileinrichtung
- 62: Zweite Ventileinrichtung
- 63: Dritte Ventileinrichtung
- 64: Vierte Ventileinrichtung
- 65: Fünfte Ventileinrichtung

- 100: Lüftungseinrichtung
- 200: Wärmepumpeneinrichtung

## Patentansprüche

1. Verfahren zur Vermeidung einer explosionsfähigen Atmosphäre in einem Energiesystem (10) bei Auftreten eines Störfalls, wobei das Energiesystem (10) aufweist
• ein als Innensystem (20) ausgebildetes erstes Untersystem, mit einem ersten Wasserstoffsystem, aufweisend eine Elektrolyseeinrichtung (21), welche zur Erzeugung von Wasserstoff bereitgestellt ist, und optional eine Brennstoffzelleneinrichtung (22);
• ein als Außensystem (30) ausgebildetes zweites Untersystem, mit einem zweiten Wasserstoffsystem, aufweisend eine Speichereinrichtung (31) zum Speichern des von der Elektrolyseeinrichtung (21) erzeugten Wasserstoffs und/oder eine Schnittstelle zu einer Speichereinrichtung (31) zum Speichern des von der Elektrolyseeinrichtung (21) erzeugten Wasserstoffs, und mit einer definierten Abgabestelle (36) für Wasserstoff,
• eine Verbindungsleitungseinrichtung (40) bestehend aus mehreren Leitungsabschnitten, die zum Transport von Wasserstoff bereitgestellt sind, wobei zumindest ein erster Leitungsabschnitt (40a) im Innensystem (20) bereitgestellt ist und einen Bestandteil des ersten Wasserstoffsystems bildet, wobei zumindest ein zweiter Leitungsabschnitt (40b) im Außensystem (30) bereitgestellt ist und einen Bestandteil des zweiten Wasserstoffsystems bildet, und wobei über einen Leitungsbus (40c) der wenigstens eine erste Leitungsabschnitt (40a) des Innensystems (20) mit dem wenigstens einen zweiten Leitungsabschnitt (40b) des Außensystems (30) verbunden ist,
**dadurch gekennzeichnet, dass** bei Auftreten eines Störfalls, das erste Wasserstoffsystem im Innensystem (20), insbesondere automatisiert, sicherheitsgerichtet in einen drucklosen Zustand gebracht wird, indem im ersten Wasserstoffsystem des Innensystems (20) befindlicher Wasserstoff aus dem Innensystem (20) über den Leitungsbus (40c) in das Außensystem (30) und dort zur Abgabestelle (36) transportiert wird.

2. Verfahren nach Anspruch 1, **dadurch gekennzeichnet, dass** der Störfall der Ausfall einer Lüftungseinrichtung (55) ist, die zur Erzeugung eines Lüftungsstroms bereitgestellt ist, der eine erforderliche Verdünnung von aus dem ersten Wasserstoffsystem des Innensystems (20) austretendem Wasserstoff gewährleistet und/oder dass der Störfall eine über einem definierten Grenzwert liegende Leckage ist.

3. Verfahren nach Anspruch 2, **dadurch gekennzeichnet, dass**, wenn im Energiesystem (10) als Störfall der Ausfall der Lüftungseinrichtung (55) erkannt wird, bei Ausfall der Lüftungseinrichtung (55) automatisch eine dem Energiesystem (10) zugeordnete Notstromversorgungseinrichtung (54) aktiviert wird, welche erforderliche Komponenten in Bezug auf Wasserstoff des Innensystems (20) und/oder des Außensystems (30), insbesondere Ventileinrichtungen und/oder Controller, mit elektrischer Energie versorgt, sodass der im ersten Wasserstoffsystem des Innensystems (20) befindliche Wasserstoff aus dem Innensystem (20) über den Leitungsbus (40c) in das Außensystem (30) und dort zur Abgabestelle (36) transportiert wird.

4. Verfahren nach Anspruch 3, **dadurch gekennzeichnet, dass** dem Energiesystem eine Steuereinrichtung zugeordnet ist, dass, wenn von der Steuereinrichtung der Ausfall der Lüftungseinrichtung (55) erfasst wird, oder wenn in der Steuereinrichtung Informationen bezüglich des Ausfalls der Lüftungseinrichtung (55) empfangen werden, die Steuereinrichtung automatisch die Notstromversorgungseinrichtung (54) aktiviert, dass die Steuereinrichtung die erforderlichen Komponenten des Innensystems (20) und/oder des Außensystems (30) aktiviert, sodass der im ersten Wasserstoffsystem des Innensystems (20) befindliche Wasserstoff aus dem Innensystem (20) über den Leitungsbus (40c) in das Außensystem (30) und zur Abgabestelle (36) befördert wird, und dass die Steuereinrichtung nach Abführung des Wasserstoffs über die Abgabestelle (36) die Notstromversorgungseinrichtung (54), und optional die erforderlichen Komponenten des Innensystems (20) und/oder des Außensystems (30), deaktiviert.

5. Verfahren nach Anspruch 2, **dadurch gekennzeichnet, dass**, wenn im Energiesystem (10) als Störfall eine über einem definierten Grenzwert liegende Leckage erkannt wird, erforderliche Komponenten in Bezug auf Wasserstoff des Innensystems (20) und/oder des Außensystems (30), insbesondere Ventileinrichtungen und/oder Controller, aktiviert werden, sodass der im ersten Wasserstoffsystem des Innensystems (20) befindliche Wasserstoff aus dem Innensystem (20) über den Leitungsbus (40c) in das Außensystem (30) und dort zur Abgabestelle (36) transportiert wird.

6. Verfahren nach Anspruch 5, **dadurch gekennzeichnet, dass** dem Energiesystem (10) eine Steuereinrichtung zugeordnet ist, dass, wenn von der Steuereinrichtung eine über einem definierten Grenzwert liegende Leckage erfasst wird, oder wenn in der Steuereinrichtung Informationen bezüglich einer über einem definierten Grenzwert liegenden Leckage empfangen werden, die Steuereinrichtung die erforderlichen Komponenten des Innensystems (20) und/oder des Außensystems (30) aktiviert, sodass der im ersten Wasserstoffsystem des Innensystems (20) befindliche Wasserstoff aus dem Innensystem (20) über den Leitungsbus (40c) in das Außensystem (30) und zur Abgabestelle (36) befördert wird, und dass die Steuereinrichtung nach Abführung des Wasserstoffs über die Abgabestelle (36) die Komponenten insbesondere deaktiviert.

7. Verfahren nach einem der Ansprüche 1 bis 6, **dadurch gekennzeichnet, dass** wenn ein Störfall detektiert wird, eine Ventileinrichtung (61; 60), die insbesondere eingangsseitig von dem Leitungsbus (40c) im ersten Leitungsabschnitt (40a) im Innensystem (20) und/oder ausgangsseitig von dem Leitungsbus (40c) im zweiten Leitungsabschnitt (40c) im Außensystem (30) angeordnet ist, aktiviert wird, sodass der im ersten Wasserstoffsystem des Innensystems (20) befindliche Wasserstoff aus dem Innensystem (20) über den Leitungsbus (40c) in das Außensystem (30) und dort zur Abgabestelle (36) transportiert wird.

8. Verfahren zur Vermeidung einer explosionsfähigen Atmosphäre in einem Energiesystem (10) bei Auftreten eines Störfalls, wobei das Energiesystem (10) aufweist
• ein als Innensystem (20) ausgebildetes erstes Untersystem, mit einem ersten Wasserstoffsystem, aufweisend eine Elektrolyseeinrichtung (21), welche zur Erzeugung von Wasserstoff bereitgestellt ist, und optional eine Brennstoffzelleneinrichtung (22);
• ein als Außensystem (30) ausgebildetes zweites Untersystem, mit einem zweiten Wasserstoffsystem, aufweisend eine Speichereinrichtung (31) zum Speichern des von der Elektrolyseeinrichtung (21) erzeugten Wasserstoffs und/oder eine Schnittstelle zu einer Speichereinrichtung (31) zum Speichern des von der Elektrolyseeinrichtung (21) erzeugten Wasserstoffs, und mit einer definierten Abgabestelle (36) für Wasserstoff,
• eine Verbindungsleitungseinrichtung (40) bestehend aus mehreren Leitungsabschnitten, die zum Transport von Wasserstoff bereitgestellt sind, wobei zumindest ein erster Leitungsabschnitt (40a) im Innensystem (20) bereitgestellt ist und einen Bestandteil des ersten Wasserstoffsystems bildet, wobei zumindest ein zweiter Leitungsabschnitt (40b) im Außensystem (30) bereitgestellt ist und einen Bestandteil des zweiten Wasserstoffsystems bildet, und wobei über einen Leitungsbus (40c) der wenigstens eine erste Leitungsabschnitt (40a) des Innensystems (40) mit dem wenigstens einen zweiten Leitungsabschnitt (40b) des Außensystems (30) verbunden ist,
insbesondere Verfahren nach einem der Ansprüche 1 bis 7, **dadurch gekennzeichnet, dass** das Energiesystem (10) in einer diskontinuierlichen Betriebsweise betrieben wird, in welcher aufgrund wechselnder Prozesse einzelne Komponenten in Bezug auf Wasserstoff im ersten Wasserstoffsystem im Innensystem (20) und/oder im zweiten Wasserstoffsystem im Außensystem (30) zeitweilig nicht benutzt werden und dass, insbesondere automatisiert, in denjenigen Komponenten, die nicht benutzt werden, eine Dichtheitsprüfung durchgeführt wird.

9. Verfahren nach Anspruch 8, **dadurch gekennzeichnet, dass**, wenn anhand der Dichtheitsprüfung detektiert wird, dass eine über einem definierten Grenzwert liegende Leckage vorliegt, das erste Wasserstoffsystem im Innensystem (20), insbesondere wenigstens eine Wasserstoffquelle davon, und/oder das zweite Wasserstoffsystem im Außensystem (30), insbesondere wenigstens eine Wasserstoffquelle davon, gesperrt wird.

10. Verfahren nach Anspruch 8 oder 9, **dadurch gekennzeichnet, dass**, wenn anhand der Dichtheitsprüfung detektiert wird, dass eine über einem definierten Grenzwert liegende Leckage vorliegt, eine Ventileinrichtung (61; 60), die insbesondere eingangsseitig von dem Leitungsbus (40c) im ersten Leitungsabschnitt (40a) im Innensystem (20) und/oder ausgangsseitig von dem Leitungsbus (40c) im zweiten Leitungsabschnitt (40b) im Außensystem (30) angeordnet ist, aktiviert wird, sodass der im ersten Wasserstoffsystem des Innensystems (20) befindliche Wasserstoff aus dem Innensystem (20) über den Leitungsbus (40c) in das Außensystem (30) und dort zur Abgabestelle (36) transportiert wird und/oder sodass der im zweiten Wasserstoffsystem des Außensystems (30) befindliche Wasserstoff aus dem Außensystem (30) über den zweiten Leitungsabschnitt (40b) zur Abgabestelle (36) transportiert wird.

11. Verfahren nach Anspruch 2, 5, 6 oder 8, 9, 10, **dadurch gekennzeichnet, dass** die Überprüfung, ob eine über einem definierten Grenzwert liegende Leckage vorliegt und/oder eine Dichtheitsprüfung in der/den Komponente(n) in Bezug auf Wasserstoff, mittels einer Ermittlung des Druckabfalls über die Zeit erfolgt.

12. Energiesystem (10), insbesondere Gebäudeenergiesystem, wobei das Energiesystem (10) aufweist
• ein als Innensystem (20) ausgebildetes erstes Untersystem, mit einem ersten Wasserstoffsystem, aufweisend eine Elektrolyseeinrichtung (21), welche zur Erzeugung von Wasserstoff bereitgestellt ist, und optional eine Brennstoffzelleneinrichtung (22);
• ein als Außensystem (30) ausgebildetes zweites Untersystem, mit einem zweiten Wasserstoffsystem, aufweisend eine Speichereinrichtung (31) zum Speichern des von der Elektrolyseeinrichtung (21) erzeugten Wasserstoffs und/oder eine Schnittstelle zu einer Speichereinrichtung (31) zum Speichern des von der Elektrolyseeinrichtung (21) erzeugten Wasserstoffs, und mit einer definierten Abgabestelle (36) für Wasserstoff,
• eine Verbindungsleitungseinrichtung (40) bestehend aus mehreren Leitungsabschnitten, die zum Transport von Wasserstoff bereitgestellt sind, wobei zumindest ein erster Leitungsabschnitt (40a) im Innensystem (20) bereitgestellt ist und einen Bestandteil des ersten Wasserstoffsystems bildet, wobei zumindest ein zweiter Leitungsabschnitt (40b) im Außensystem (30) bereitgestellt ist und einen Bestandteil des zweiten Wasserstoffsystems bildet, und wobei über einen Leitungsbus (40c) der wenigstens eine erste Leitungsabschnitt (40a) des Innensystems (20) mit dem wenigstens einen zweiten Leitungsabschnitt (40b) des Außensystems (30) verbunden ist,
**dadurch gekennzeichnet, dass** zur Vermeidung einer explosionsfähigen Atmosphäre im Energiesystem bei Auftreten eines Störfalls das Energiesystem (10) zur Ausführung eines Verfahrens nach einem der Ansprüche 1 bis 11 ausgebildet ist, oder im Energiesystem (10) ein Verfahren nach einem der Ansprüche 1 bis 11 ausgeführt wird.

13. Energiesystem nach Anspruch 12, **dadurch gekennzeichnet, dass** das Energiesystem (10) eine Steuereinrichtung aufweist, die zur Durchführung des Verfahrens nach einem der Ansprüche 1 bis 11 eingerichtet ist.

14. Energiesystem nach Anspruch 12 oder 13, **dadurch gekennzeichnet, dass** der Speichereinrichtung (31, 31a, 31b) im zweiten Leitungsabschnitt (40b) des Außensystems (30) wenigstens eine Ventileinrichtung (64, 62) zugeordnet ist.

15. Energiesystem nach Anspruch 14, **dadurch gekennzeichnet, dass** der zweite Leitungsabschnitt (40b) und die Komponenten in Bezug auf Wasserstoff des Außensystems (30) strömungstechnisch vor der Ventileinrichtung (64, 62) volumetrisch klein ausgebildet sind.
